(19)

Europäisches Patentamt
European Patent Office
Office européen des brevets

(11) **EP 1 563 630 B1**

(12) **EUROPÄISCHE PATENTSCHRIFT**

(45) Veröffentlichungstag und Bekanntmachung des Hinweises auf die Patenterteilung:
**10.10.2007 Patentblatt 2007/41**

(21) Anmeldenummer: **03776842.1**

(22) Anmeldetag: **10.11.2003**

(51) Int Cl.:
*H04L 1/00* (2006.01)      *H04L 1/06* (2006.01)
*H04B 7/005* (2006.01)

(86) Internationale Anmeldenummer:
**PCT/DE2003/003713**

(87) Internationale Veröffentlichungsnummer:
**WO 2004/047354 (03.06.2004 Gazette 2004/23)**

(54) **MIMO-SIGNALVERARBEITUNGSVERFAHREN MIT EINER RANGADAPTIVEN ANPASSUNG DER DATENÜBERTRAGUNGSRATE**

MIMO SIGNAL PROCESSING METHOD INVOLVING A RANK-ADAPTIVE MATCHING OF THE TRANSMISSION RATE

PROCEDE DE TRAITEMENT BIDIRECTIONNEL DE SIGNAUX POUR SYSTEME MIMO (A ENTREES MULTIPLES - A SORTIES MULTIPLES) AVEC ADAPTATION DE LA VITESSE DE TRANSMISSION ADAPTATIVE AU RANG

(84) Benannte Vertragsstaaten:
**AT BE BG CH CY CZ DE DK EE ES FI FR GB GR HU IE IT LI LU MC NL PT RO SE SI SK TR**

(30) Priorität: **17.11.2002 DE 10254384**

(43) Veröffentlichungstag der Anmeldung:
**17.08.2005 Patentblatt 2005/33**

(73) Patentinhaber: **SIEMENS AKTIENGESELLSCHAFT**
**80333 München (DE)**

(72) Erfinder:
• **JORSWIECK, Eduard**
  **12163 Berlin (DE)**
• **JUNGNICKEL, Volker**
  **10435 Berlin (DE)**
• **HAUSTEIN, Thomas**
  **81735 München (DE)**

• **VON HELMOLT, Clemens**
  **12205 Berlin (DE)**

(56) Entgegenhaltungen:
• **KIESSLING M ET AL: "Short-term and long-term diagonalization of correlated MIMO channels with adaptive modulation" CONFERENCE PROCEEDINGS: 13TH IEEE INTERNATIONAL SYMPOSIUM ON PERSONAL INDOOR , LISBON, PT, Bd. 2, 15. - 18. September 2002, Seiten 593-597, XP010614294 New York, US**
• **JUNGNICKEL V ET AL: "A MIMO WLAN based on linear channel inversion" IEE SEMINAR MIMO: COMMUNICATIONS SYSTEMS FROM CONCEPT TO IMPLEMENTATIONS (REF. NO.01/175), IEE SEMINAR MIMO: COMMUNICATIONS SYSTEMS FROM CONCEPT TO IMPLEMENTATION, LONDON, UK, 12 DEC. 2001, Seiten 20/1-6, XP002277765 2001, London, UK, IEE, UK in der Anmeldung erwähnt**

EP 1 563 630 B1

**Beschreibung**

Die Erfindung bezieht sich auf ein bidirektionales Signalverarbeitungsverfahren zur Parallelübertragung von digitalen Sendedatenströmen in regulären und singulären Funkkanälen eines Multiple-Input-Multiple-Output-Funkübertragungssystems (MIMO-System) mit $n_T$ Sendeantennen und $n_R$ Empfangsantennen.

Ausgehend von der Erkenntnis von Foschini und Gans, dass die Kapazität von Mobilfunksystemen durch gleichzeitige Nutzung von mehreren Antennen am Sender und am Empfänger wesentlich erhöht werden kann, hat sich in den letzten Jahren ein neues Forschungsgebiet im Mobilfunk entwickelt. Durch frühere Systemansätze, wie z.B. das bekannte BLAST-System **[1]** wurde die prinzipielle Struktur solcher MIMO-Systeme aufgeklärt. Grundsätzlich werden mehrere Datenströme gleichzeitig auf derselben Frequenz, zu demselben Zeitpunkt und gegebenenfalls, auch mit demselben Spreizcode übertragen. Das kann durch eine vektorielle Übertragungsgleichung der Art

$$\mathbf{y} = \mathbf{H} \cdot \mathbf{x} + \mathbf{n} \qquad\qquad \textbf{(a)}$$

beschrieben werden, wobei **x** ein Vektor (gekennzeichnet durch fette Schreibweise) mit den gleichzeitig gesendeten Signalen, **y** ein Vektor mit allen Empfangssignalen und n ein Vektor mit dem isotropen Empfängerrauschen ist. Für die Ausnutzung der verfügbaren Kanalkapazität ist die möglichst perfekte Kenntnis der Übertragungseigenschaften des MIMO-Kanals zwingend notwendig, das heißt, die Eigenschaften der Basisband-Kanalmatrix H mit den komplexen Übertragungskoeffizienten zwischen jeder Sende- und jeder Empfangsantenne müssen empfangsseitig und gegebenenfalls auch sendeseitig hinreichend bekannt sein. Das kann beispielsweise durch bekannte Schätzverfahren auf der Basis von Trainingssequenzen erreicht werden. Im Folgenden wird **H** so normiert, dass der mittlere Pfadverlust gleich 1 ist. Die grundsätzlich nicht kausale Kanalkenntnis auf der Sendeseite kann beispielsweise über einen Rückkanal von der Empfangsseite erlangt werden, solange sich der MIMO-Kanal zeitlich nicht verändert hat. Im Zeitduplex (time division duplex, TDD, z.B. wireless LAN, UMTS-TDD) kann man aufgrund der Reziprozität des Kanals auch die Kanalkenntnis aus der Gegenrichtung benutzen, wodurch der Rückkanal wegfällt. Hierauf aufbauend kann man dann lineare oder nicht-lineare Signalverarbeitung auf der Empfangsseite und ggf. auch auf der Sendeseite anwenden, um die gleichzeitig gesendeten Datensignale wieder voneinander zu separieren. Dies entspricht einer Auflösung des linearen Gleichungssystems gemäß Gleichung **(a)** nach dem Sendevektor **x.**

Die aktuell bekannten Systemansätze gehen meist von den wesentlichen Annahmen aus, dass sendeseitig das Übertragungsverhalten des Kanals nicht bekannt ist und dass die Kanalkoeffizienten voneinander unabhängige, gleichartig verteilte (engl.: independently and identically distributed, i.i.d.) Zufallszahlen gemäß einer komplexwertigen Gaußverteilung sind (RayleighKanal). Kanalkenntnis nur am Empfänger ist eine sinnvolle Annahme für Frequenzduplex-Systeme ((FDD, viele Mobilfunknetze, z.B. GSM, UMTS-FDD), in denen die Kanalreziprozität nicht gilt und die oben erwähnte Rückübertragung der Kanalkoeffizienten eine zu große Bandbreite benötigen würde. Die Algorithmen zur rein empfangsseitigen Separation der Datenströme werden allerdings umso komplexer, je näher sie an die theoretisch mögliche Kapazitätsgrenze heranführen. Das Optimum stellt die sogenannte "Maximum-Likelihood Detektion" (MLD) dar. Diese Detektion ist jedoch so aufwändig, dass sie in echtzeitfähigen Systemen bei realistischen Datenraten nicht einsetzbar ist. Deshalb werden zumeist weniger komplexe, suboptimale Methoden mit direkter oder rekursiver Interferenzreduktion eingesetzt, wie z.B. Zero-Forcing- oder V-BLAST-Verfahren **[1].**

Diese suboptimalen Methoden zeigen aber ein grundlegendes Problem, wenn die zweite Annahme verletzt ist. Die Annahme einer i.i.d.-Gaußverteilung ist nur dann zutreffend, wenn im Übertragungskanal eine Vielzahl von Echosignalen auftreten. In Umgebungen mit wenig Streuung, beispielsweise bei direktem Sichtkontakt eines mobilen Empfangsgeräts auf einem freien Feld zu einem hohen, weit entfernten Sendemast, sind die Einträge in der Kanalmatrix nicht mehr unabhängig voneinander verteilt und es kommt zu Korrelationen zwischen den Empfangssignalen. Im genannten Beispiel wären die Signale nur gegeneinander phasenverschoben, hätten aber aufgrund der nahezu gleichen Entfernung zum Sender annähernd die gleiche Amplitude, wenn keine Abschattungen vorliegen. Es ist gut bekannt, dass korrelierte Kanäle generell eine geringere Übertragungskapazität als Rayleigh-Kanäle haben, sodass über sie auch nur weniger Informationen übertragen werden können.

Im Extremfall von auftretenden Korrelationen wird die Kanalmatrix **H** singulär, das heißt, es existiert auch keine endliche pseudoinverse Matrix mehr. Darauf aufbauende Signalverarbeitungsverfahren sind somit nicht anwendbar. Singularitäten können sogar auch ohne Korrelationen auftreten ("keyhole-Kanäle"). Wird auf solche Kanäle die Singulärwertzerlegung (SVD(**H**) = **U·D·V**$^H$) mit einer Überführung des komplexen MIMO-Kanals in eine sender- und eine empfangsseitige Transformationsmatrix **V** resp. **U** und eine quasi-Diagonalmatrix **D** angewendet, bei der auf der linken oberen Hauptdiagonale die geordneten, aus den subkanal-charakteristischen Eigenwerten $\lambda_i$ abgeleiteten Singulärwerte $\sqrt{\lambda_i}$ und ansonsten Nullen stehen, ist ersichtlich, dass einer oder mehrere der Singulärwerte im obigen Beispiel nahe bei Null liegen. Im Folgenden wird anhand des sehr einfachen Zero-Forcing-Verfahrens kurz erläutert, warum die Signalverarbeitung in singulären Kanälen so schwierig ist. Wird mit Hilfe der SVD beispielsweise die linksseitige pseudoinverse Matrix $\mathbf{H}^{-1} = \mathbf{V} \cdot \mathbf{C}^{-1} \cdot \mathbf{U}^H$ gebildet, handelt es sich auch bei $\mathbf{D}^{-1}$ um eine quasi-diagonale Matrix, bei der auf der linken oberen Hauptdiagonale die inversen Singulärwerte $1/\sqrt{\lambda_i}$ und ansonsten Nullen stehen. Bei der empfangsseitigen Signalrekonstruktion, die einer Auflösung des obigen Gleichungssystems **(a)** entspricht, im Zero-Forcing -Verfahren wird der empfangene Signalvektor **y** mit $\mathbf{H}^{-1}$ multipliziert. Es gilt (rekonstruierte Signale sind mit einem Apostroph gekennzeichnet) :

$$\mathbf{x'} = \mathbf{x} + \mathbf{H}^{-1} \cdot \mathbf{n} \qquad\qquad \textbf{(b)}$$

Vom Signaldetektor aus gesehen wird also auch das Rauschen mit $\mathbf{H}^{-1}$ multipliziert. Ist nun einer oder mehrere Singulärwerte wie im obigen Beispiel gleich null oder liegt auch nur nahe bei Null, dann sind die entsprechenden Inverswerte in $\mathbf{H}^{-1}$ sehr groß. Folglich wird das Rauschen massiv angehoben und bei der Entscheidung für ein Datensymbol werden in allen Datenströmen viele Fehler gemacht. Das Rauschen ist in jedem Fall nicht mehr isotrop verteilt. Mit Ausnahme der MLD, die für praktische Anwendungen jedoch viel zu komplex ist, haben daher alle bekannten Signalverarbeitungsverfahren erhebliche Probleme in singulären Kanälen. Eine allgemeinere, mathematische Beschreibung dieses Problems beruht auf Kapazitätsbetrachtungen. Aus diesen kann die effektive Dimension des Signalraums (Effective Degrees Of Freedom, EDOF) abgeleitet werden, die u.a. vom Verhältnis der Sendeleistung zur Rauschleistung am Empfänger bestimmt wird **[2]**. Diese Größe hängt außerdem ganz empfindlich von der Größe der auftretenden Singulärwerte ab. Je mehr Singulärwerte nahe bei Null sind, desto weniger Dimensionen hat der Signalraum, zumindest bei einem kleinen Signal-zu-Rausch-Verhältnis. Sollen mehrere Datenströme parallel übertragen werden, dann sollte daher die Anzahl der Datenströme an die effektive Dimension des Signalraums EDOF angepasst sein. Anderenfalls kommt es zumindest bei den einfachen Übertragungsverfahren, die auf Projektionstechniken beruhen, zu erheblichen Fehlern bei der Datenübertragung.

Aufgrund ihrer Relevanz für den Mobilfunk werden derzeit weitestgehend nur Signalverarbeitungsverfahren für FDD-Systeme betrachtet. In diesen Übertragungssystemen existiert im Allgemeinen keine sendeseitige Kanalkenntnis, es erfolgt eine rein empfangsseitige Signalverarbeitung. In der Literatur wird beispielsweise vorgeschlagen, bei auftretenden singulären Subkanälen Sendeantennen "hart" abzuschalten, das heißt, die entsprechenden Datenströme einfach nicht zu übertragen **[3]**. Eine Leistungsregelung findet hier nicht statt. In dem Lucent-Vorschlag für die Erweiterung des UMTS-Standards **[4]** wird dagegen ein "sanftes" Abschalten der Sendeantennen benutzt. Die Modulation und Kodierung wird empfangsseitig für jeden Datenstrom gesondert an die Übertragungseigenschaften angepasst. Die Auswahl des Modulations- und Kodierverfahrens erfolgt jedoch am Empfänger auf der Grundlage dort vorliegender Kanalkenntnis und unter Einbeziehung der Eigenschaften der räumlichen Signalverarbeitung. Diese Information wird dem Sender dann über einen Rückkanal mitgeteilt, was im Vergleich zur Übertragung der gesamten Kanalmatrix weniger Bandbreite benötigt. Allerdings fehlen bislang gesicherte Erkenntnisse, wie effizient diese Verfahren mit der verfügbaren Kapazität in singulären Kanälen wirklich umgehen können.

Der nächstliegende Stand der Technik, von dem die Erfindung ausgeht, wird in **[5]** beschrieben. In dieser Arbeit wird für ein Übertragungssystem der eingangs beschriebenen Art vorgeschlagen, das LCI-Verfahren (Linear Channel Inversion) für WLAN-Applikationen, speziell für die Abwärtsstrecke, einzusetzen. Da WLANs zumeist innerhalb von Räumen eingesetzt werden, sind die

[Beschreibung]

Vorraussetzungen für ein MIMO-System ähnlich wie in einem i.i.d. Rayleigh-Übertragungskanal und folglich sehr gut. Das Verfahren an sich hat den Vorteil, dass empfangsseitig weder eine Kanalkenntnis noch eine Signalverarbeitung erforderlich ist, sodass preiswerte Empfangsgeräte verwendet werden können. Speziell in singulären Kanälen zeigt aber auch das LCI-Verfahren - wie die bekannten ZF- und BLAST-Verfahren - erhebliche Probleme. Auch die rein sendeseitige Signalverarbeitung hat den Nachteil, dass die nur schwer vorhersagbaren Eigenschaften der Signalverarbeitung mit in die zu treffende Auswahl des Modulations- und Kodierverfahrens für die einzelnen Datenströme einfließen. Dabei werden alle Datensignale mehr oder weniger gleichmäßig auf grundsätzlich alle Eigenvektoren verteilt. Durch das Arbeiten mit einer festen Anzahl von Datenströmen, d.h. auch mit einer konstanten Datenrate, erhöhen die zu kleinen Eigenwerte dann jedoch die Bitfehlerrate für die gesamte Übertragung. Die Bitfehlerrate steigt somit in singulären Subkanälen dramatisch an. Ursache hierfür ist die Invertierung von Singulärwerten gleich oder nahe bei null. In solchen Kanälen ist dann eine unverhältnismäßig hohe Sendeleistung erforderlich, um die Sendedaten zuverlässig übertragen zu können. Das bekannte LCI-Verfahren ist daher ebenso wie die Verfahren mit rein empfängerseitiger Kanalkenntnis nur für Kanäle mit ausreichender Signalstreuung, die in der Regel nur im Innenraumbereich oder in stark bebauten Gebieten (z.B. Straßenzüge in Großstädten) zu finden sind, und bei konstanter Übertragungsdatenrate zufriedenstellend einsetzbar.

Aus dem Artikel von KIESSLING M ET AL: "Short-term and long-term diagonalization of correlated MIMO channels with adaptive modulation" CONFERENCE PROCEEDINGS: 13TH IEEE INTERNATIONAL SYMPOSIUM ON PERSONAL INDOOR , LISBON, PT, Bd. 2ß, 15. September 2002 (2002-09-15), - 18. September 2002 (2002-09-18) Seiten 593-597, New York, US, ist eine Kurzzeit - und Langzeit - Diagonalisierung eines korrelierten MIMO-Kanals bei Verwendung einer adaptiven Modulation bekannt.

Die Aufgabe für die vorliegende Erfindung besteht daher darin, ausgehend von dem bekannten linearen Signalverarbeitungsverfahren ein modifiziertes Signalverarbeitungsverfahren anzugeben, das sowohl im innenraumbereich als auch im Freien eine sichere und gegen Störungen unemplindliche Datenübertragung gewährleistet. Dabei soll die erforderliche maximale Sendeleistung möglichst gering und konstant sein. Das erfindungsgemäße Signalverarbeitungsverfahren soll geringkomplex und damit echtzeitfähig sein.

Außerdem soll es preiswert in der praktischen Umsetzung sein. Die erfindungsgemäße **Lösung** für diese Aufgabe ist dem Anspruch 1 und 2 zu entnehmen. Vorteilhafte Weiterbildungen des erfindungsgemäßen Signalverarbeitungsverfahren sind in den Unteransprüchen aufgeführt. Im Folgenden wird die Erfindung in ihrem Gesamterscheinungsbild und auch in Bezug auf die vorteilhaften Weiterbildungen näher erläutert.

Das erfindungsgemäße Signalverarbeitungsverfahren beruht auf der Erkenntnis, dass das Invertieren von sehr kleinen - schlechten - Singulärwerten der kritische Punkt ist, warum die Bitfehlerrate in singulären Kanälen so dramatisch ansteigt. Es muss es also unbedingt vermieden werden, die Sendesignale auf die zu den sehr kleinen Singulärwerten gehörenden Eigenvektoren abzubilden. Bei dem erfindungsgemäßen Signalverarbeitungsverfahren erfolgt die Signalverarbeitung deshalb direkt im Eigenvektorraum von $HH^H$ mit einer exakten Zuordnung der einzelnen Datenströme zu den Eigenvektoren bzw. Subkanälen. Subkanäle bzw. Eigenvektoren mit zu kleinen Eigenwerten können dann durch das Weglassen von Datenströmen einfach abgeschaltet werden. Durch die zyklische Überprüfung der Qualität der einzelnen Subkanäle beim erfindungsgemäßen Signalverarbeitungsverfahren können diese bei einer Verbesserung der Übertragungsqualität dann auch wieder zugeschaltet werden. Mit dem erfindungsgemäßen Signalverarbeitungsverfahren werden also die Subkanäle nur in Abhängigkeit von ihrer Übertragungsqualität belegt, wodurch ständig die Anzahl der $n_d$ aktuell genutzten Subkanäle variieren kann. Durch die Nutzung nur der geeigneten Subkanäle geht auch keine Sendeleistung auf schlechten Subkanälen verloren. Vielmehr kann die maximale Sendeleistung, die nunmehr einen relativ kleinen Wert annehmen und weitgehend konstant gehalten werden kann, optimal auf die genutzten Subkanäle verteilt werden. Einen Einfluss auf die Leistungsverteilung hat dabei auch die Wahl des günstigsten Modulations- und Kodierverfahren. Das erfindungsgemäße Signalverarbeitungsverfahren stellt damit ein rangadaptives Verfahren für ein einfaches Verbindungsschema im Übertragungskanal dar, das sowohl im Innenraum als auch im Außenbereich und damit in beliebiger Umgebung - auch mit auftretenden Singularitäten - eine sichere Datenübertragung garantiert. Dabei ist die Datenrate durch die zeitlich unterschiedliche Belegung der Subkanäle zwar variabel (für Funktionen außerhalb einer direkten Sprach- oder Videokommunikation ist jedoch eine variable Datenrate unkritisch), es können aber eine konstant niedrige Sendeleistung und eine sehr geringe Bitfehlerrate garantiert werden. Zudem wird die Verbindung erst dann unterbrochen, wenn die Sendeleistung auch zur Unterstützung eines einzelnen Datenstroms nicht mehr ausreicht. Daher kann die Verbindung auch über größere Entfernungen und in singulären Kanälen noch aufrechterhalten werden, d.h. die Reichweite erhöht sich.

Das erfindungsgemäße Signalverarbeitungsverfahren mit seiner Signalprozessierung am Sender im Eigenvektorraum von $HH^H$ und der Konstanthaltung der Leistung ist ein stufenweiser Kompromiss zwischen dem räumlichen Multiplexing (Parallelübertragung von Datenströmen) im MIMO-System aufgrund der aktuellen Kanalbelegung auf der einen Seite und der erreichbaren Diversität (Mehrfachempfang) für die benutzten Datenströme als Maß für die Verringerung der Bitfehlerrate bei einer Erhöhung der maximalen Sendeleistung auf der anderen Seite. Die Übertragungsrate wird optimal an die effektive Dimension des Signalraumes angepasst. Dabei wird eine Kanalüberlastung bezüglich seiner Kapazität vermieden. Es reicht jedoch eine Signalverarbeitung allein nicht aus, sondern es müssen in den Optimierungsprozess im Hinblick auf die Kanaleigenschaften zusätzlich auch die Modulation und Kodierung der Datenströme einbezogen werden. Nur durch die richtige Kombination der einzelnen Anpassungsmöglichkeiten kann ein optimaler Datendurchsatz bei konstant niedriger Sendeleistung erreicht werden. Die Anzahl der aktuell benutzten Subkanäle richtet sich daher nach dieser Kombination. Mitunter kann es z.B. günstiger sein, ein Kodier- und Modulationsschema mit höherer spektraler Effizienz zu benutzen und dafür stark rauschende Kanäle abzuschalten. Diesem Umstand wird durch die zyklische Wiederholung des erfindungsgemäßen Signalverarbeitungsverfahrens Rechnung getragen, wobei sich die Häufigkeit nach den zeitlichen Änderungen der Kanaleigenschaften richtet.

Das Signalverarbeitungsverfahren nach der Erfindung beschäftigt sich insbesondere mit Übertragungssystemen im TDD-Modus (z.B. wireless LAN, UMTS-TDD), bei denen die Kanalkenntnis am Sender verfügbar ist. Die Erfindung greift zum Teil auf theoretische Erkenntnisse zur Optimierung der informationstheoretischen Kapazität zurück, speziell auf das sogenannte "Waterfilling". Allgemein kann die Kapazität eines MIMO-Kanals in der Form

$$C = \log_2 \det\left(1 + \frac{1}{P_N} HRH^H\right) \qquad\qquad \textbf{(c)}$$

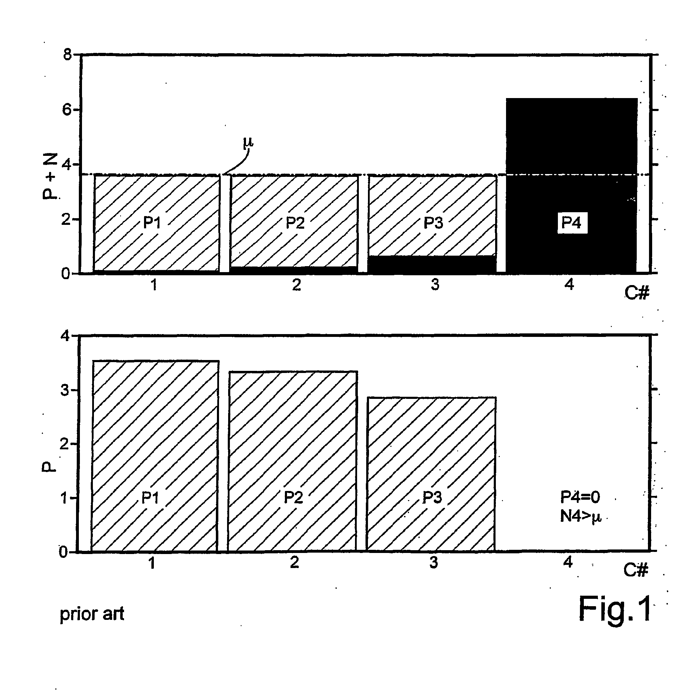

dargestellt werden. Grundsätzlich ist die Kapazität maximal, wenn die Sendekovarianzmatrix **R** im Eigenvektorraum von **HH**$^H$ diagonal ist. Man kann zum Auffinden der optimalen Hauptdiagonalelemente $P_i$ von **R,** die die Leistungsverteilung auf die einzelnen Eigenvektoren von **HH**$^H$ angeben, die Methode der Lagrange-Multiplikatoren anwenden (Optimierung mit der Randbedingung, dass die Gesamtsendeleistung endlich ist). Dabei ergibt sich ein einfaches Gleichungssystem. Es fordert, dass die Summe aus $P_i$ und einem Rauschterm $N_i$, der sich aus den obigen Singulärwerten von **H** ergibt, für alle Eigenvektoren gleich einer zunächst unbekannten Konstanten $\mu$ sein soll. Das Ergebnis wird in der **Figur 1** zum Stand der Technik für einen zufälligen 4x4-Kanal veranschaulicht. Die Konstante $\mu$ kann man iterativ in einem echtzeitfähigen Algorithmus bestimmen und damit ist dann auch die Leistungsverteilung bekannt. Es zeigt sich, dass es aus der Sicht der Kapazität relativ oft das Effizienteste ist, Kanäle abzuschalten und die so freiwerdende Leistung auf bessere Kanäle umzuverteilen.

Der wesentliche Ansatz in der vorliegenden Erfindung ist, dass das Water-Filling-Prinzip und auch das Prinzip der adaptiven Kanalinversion als eine vereinfachte sub-optimale Form davon mit einer strukturell sehr einfachen, insbesondere linearen Signalverarbeitung direkt im Raum der Eigenvektoren von **HH**$^H$ umgesetzt werden können, wenn sende- und empfangsseitig die Kanalmatrix **H** hinreichend genau bekannt ist, also speziell in TDD-Systemen. Durch die sendeseitige Kanalkenntnis vereinfacht sich der Systemaufbau erheblich und man kann mit simplen Übertragungsverfahren sehr nahe an die Kapazitätsgrenze des Kanals gelangen. Die beidseitige Kanalkenntnis ermöglicht insbesondere eine einfache Anpassung der Übertragungsrate an die gegebenen Kanaleigenschaften, wodurch u.a. auch eine zuverlässige Übertragung in singulären Kanälen mit präzise vorhersagbaren Fehlerraten möglich wird. Hierdurch vereinfacht sich auch die Auswahl des geeigneten Modulations- und Kodierverfahrens erheblich. In einer erweiterten Form der Erfindung können die statistischen Schwankungen der Sendeleistung bereits vorab herausgerechnet werden, die normalerweise durch die senderseitige Signalverarbeitung entstehen. Dadurch können dann kostengünstigere Verstärker mit hohem Wirkungsgrad eingesetzt werden.

Zum weiteren Verständnis der Erfindung wird diese anhand der einzelnen Verfahrensschritte im Folgenden näher erläutert. Dabei umfasst das bidirektionale Signalverarbeitungsverfahren zur robusten Parallelübertragung von digitalen Sendedatenströmen in regulären und singulären Subkanälen eines Multiple-Input-Multiple-Output-Funkübertragungssystems (MIMO -System) mit $n_T$ Sendeantennen und $n_R$ Empfangsantennen mit einer rangadaptiven Anpassung der Datenübertragungsrate an die aktuell gesamtverfügbare Kanalkapazität unter Konstanthaltung der maximalen Sendeleistung $P_{ges}$ als Summe aller Subkanalleistungen $P_i$ mit i = 1...min ($n_T$, $n_R$), wobei die bezüglich der Kanalmatrix **H** rangadaptive Anpassung der Datenübertragungsrate an die aktuell verfügbare Kanalkapazität mittels einer fortlaufend an das aktuelle Kanalverhalten angepassten Variation von $n_d$ aktuell benutzten Subkanälen und der spektralen Effizienz K des zumindest einen gewählten Kodier- und Modulationsverfahrens erfolgt, folgende zyklisch zu wiederholende Verfahrensschritte :

**I)** Ermittlung der Kanalmatrix **H** auf der Sende- und der Empfangsseite des MIMO-Systems gemäß

$$\textbf{y} = \textbf{Hx} + \textbf{n} \qquad\qquad \textbf{(1)}$$

mit **y** = Empfangsvektor
**x** = Sendevektor
**n** = Rauschvektor

Zunächst benötigt man die Kanalkenntnis **H** am Sender und am Empfänger. Hierzu werden beispielsweise in einer Trainingsperiode nacheinander kurze Trainings- oder Pilotsequenzen in beide Richtungen der Verbindung gesendet, anhand derer die Gegenstelle jeweils die Kanalmatrix schätzt. Diese Information kann dann je nach aktueller Senderichtung entweder für die senderseitige oder für die empfangsseitige Signalverarbeitung benutzt werden. Es wird davon ausgegangen, dass hinreichend lange Sequenzen verwendet werden, so dass der Schätzfehler vernachlässigbar ist. Eine Rückmeldung der Kanalmatrix an den Sender über einen Rückkanal vom Empfänger ist auch möglich.

**II)** Singulärwertzerlegung SVD$(\mathbf{H}) = \mathbf{UDV}^H$ der bekannten Kanalmatrix **H** mit dem maximalen Rang min$(n_T, n_R)$ auf der Sendeseite und auf der Empfangsseite des MIMO-Systems zur Ermittlung der unitären Transformationsmatrizen **U** und **V** sowie der Diagonalmatrix **D** mit den aus den Eigenwerten $\lambda_i$ der Subkanäle abgeleiteten, geordneten Singulärwerten $\sqrt{\lambda_i}$ auf der linken Hauptdiagonalen.

Anhand der bekannten Kanalmatrix **H** wird auf beiden Seiten eine Singulärwertzerlegung der Kanalmatrix durchgeführt, d.h. die Matrizen **U**, **D** und **V** sind auf beiden Seiten bekannt.

**III)** Berechnung des Sendevektors **x** auf der Sendeseite des MIMO-Systems durch eine lineare Matrix-Vektor-Multiplikation gemäß

$$\mathbf{x} = \frac{1}{\gamma}\mathbf{V\,Q\,d} \qquad\qquad (2)$$

mit $\gamma = \sqrt{\sum_{i=1}^{n_d}\dfrac{P_i}{P_{ges}}} =$ Verstärkungsfaktor zur Beschränkung der Gesamtsendeleistung $P_{ges}$,

mit **V** = rechte unitäre Transformationsmatrix gemäß II)

mit **Q** = diagonale Sendematrix mit den Werten $\sqrt{P_i}$ auf der linken Hauptdiagonalen und

mit **d** = aktueller Sendedatenvektor mit der veränderlichen Länge $n_d \leq$ min $(n_T, n_R)$ aus der Unterstützung von $n_d$ Subkanälen zur Parallelübertragung der Sendedatenströme

Am Sender wird der Datenvektor **d** durch eine lineare Matrix-Vektor-Multiplikation modifiziert. Dabei wird die Konstante $\gamma$ eingeführt, um die Sendeleistung zu beschränken bzw. konstant zu halten. Prinzipiell ist dabei die Länge des Datenvektors **d**, d.h. die Anzahl der Datenströme $n_d$ variabel.

**IV)** Multiplikation des aktuell empfangenen Sendevektors $\gamma$ auf der Empfangsseite des MIMO-Systems mit $\gamma\,\mathbf{U}^H$, woraus durch Einsetzen gemäß I) und II) folgt

$$\mathbf{d^*} = \gamma\,\mathbf{U}^H\mathbf{y} = \mathbf{D\cdot Q\cdot d} + \gamma\,\mathbf{U}^H\mathbf{n} \qquad\qquad (3)$$

Es gilt : $d^* = \gamma\cdot\tilde{y}$ (die Tilde kennzeichnet die Koordinaten des Empfangsvektors bzgl. der normierten Eigenvektoren im Empfangsraum) $\Rightarrow \tilde{y} = U^H \cdot y = U^H \cdot UDV^H \cdot x + U^H n = U^H U \cdot D \cdot V^H \cdot \dfrac{1}{\gamma} \cdot V \cdot Q \cdot d + U^H n \Rightarrow$

$$\tilde{y} = D \cdot Q \cdot d \cdot \frac{1}{\gamma} + U^H n$$

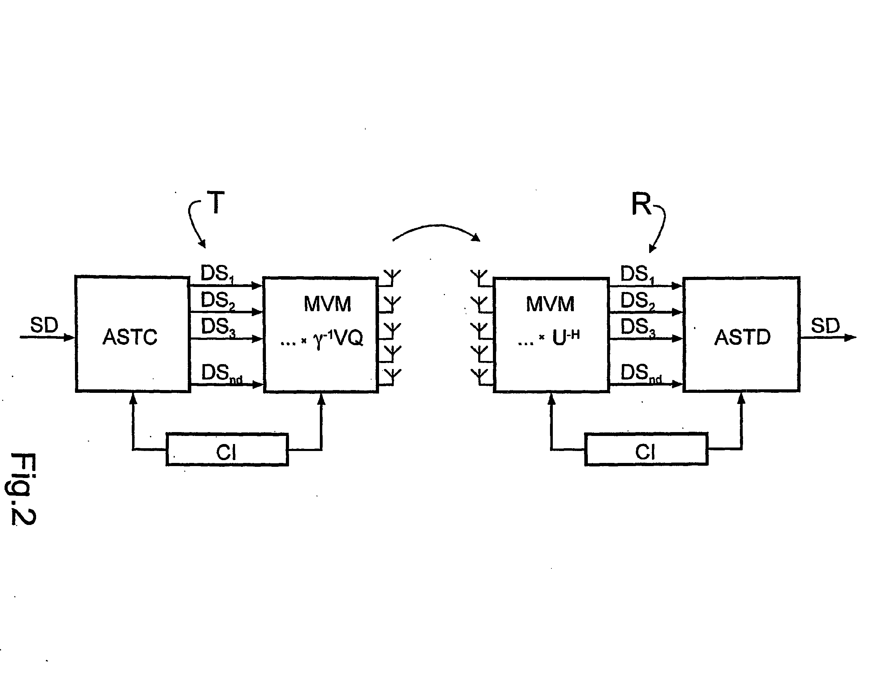

Die Matrizen **D** und **Q** sind Diagonalmatrizen. Die Eigenwerte des Kanals in $\mathbf{D}^2$ heißen $\lambda_1 \dots \lambda_{nd}$. Für die Gleichung (3) erhält man somit $n_d$ Gleichungen der Art gemäß Verfahrensschritt V. Bei einer Betrachtung der effektiven Übertragungskanäle für die Datensignale zeigen sich die so erzeugten Subkanäle transparent, das heißt, sie weisen kein Übersprechen zum Nachbarkanal auf. Der Rauschvektor n wird durch die Multiplikation mit der unitären Matrix $\mathbf{U}^H$ gedreht. Dabei bleibt die isotrope Wahrscheinlichkeitsdichte erhalten, somit weisen die erzeugten Subkanäle eine vollkommen isotrope Rauschverteilung auf. Die abschließende Multiplikation mit $\gamma$ verstärkt oder reduziert je nach Wahl von $\gamma$ das Rauschen. Vergleiche zu den Schritten III und IV die **Figur 2.**

**V)** Ermittlung der $n_d$ Komponenten $d_k{}^*$ des aktuell empfangenen, modifizierten Sendedatenvektors **d**\* nach IV) gemäß

$$d_k^* = \sqrt{\lambda_k \cdot P_k} \cdot d_k + \gamma \cdot \tilde{n}_k \qquad (4)$$

mit k = 1...$n_d$

Analog zu Schritt IV gilt hier auch : $\tilde{y}_k = \sqrt{\lambda_k P_k} \cdot \dfrac{d_k}{\gamma} + \tilde{n}_k$

**VI)** Wahl der Subkanalleistungen $P_i$ gemäß

    **a)** mit einer optimal-rangadaptiven Unterstützung aller Subkanäle $P_i > 0$ nach dem Water-Filling-Prinzip WF gemäß

$$P_i = \left( \mu - \frac{\sigma_n^2}{\lambda_i} \right)^+ \qquad (5)$$

    mit $(a)^+ = 0$ für $a = 0$ und $(a)^+ = a$ für $a > 0$

    mit $\mu$ = Füllfaktor, der so gewählt wird, dass gilt $\sum\limits_{i=1}^{n_d} P_i = P_{ges} \Rightarrow \gamma=1$

    mit $\sigma_n^2$ = Rauschleistung am Empfänger (normierbar auf 1)

woraus sich die Anzahl $n_d$ der aktuell nutzbaren Subkanäle für eine Modifikation des aktuellen Sendedatenvektors d ergibt gemäß

$$n_d = \left| \left\{ i : p_i > 0 \right\} \right| \qquad (6)$$

und woraus sich ein variables Signal-zu-Rausch-Verhältnis ergibt gemäß

$$SNR_k^{WF} = \frac{\lambda_i \cdot P_i}{\sigma_n^2} \cdot \qquad (7)$$

Für die technische Umsetzung der optimal-rangadaptiven Unterstützung aller Subkanäle $P_i > 0$ nach dem Water-Filling-Prinzip WF werden zunächst die Werte $P_i$ wie oben beschrieben bestimmt. Unterstützt werden nur die Datenströme, für die gilt Pi>0. Prinzipiell hat der Übertragungskanal jetzt für jeden unterstützten Datenstrom die Eigenschaften des weiß verrauschten AWGN-Kanals. Allerdings ist das resultierende Signal-zu-Rausch-Verhältnis gemäß Gleichung **(7)** in den einzelnen Datenströmen unterschiedlich, weil die beiden Fak-

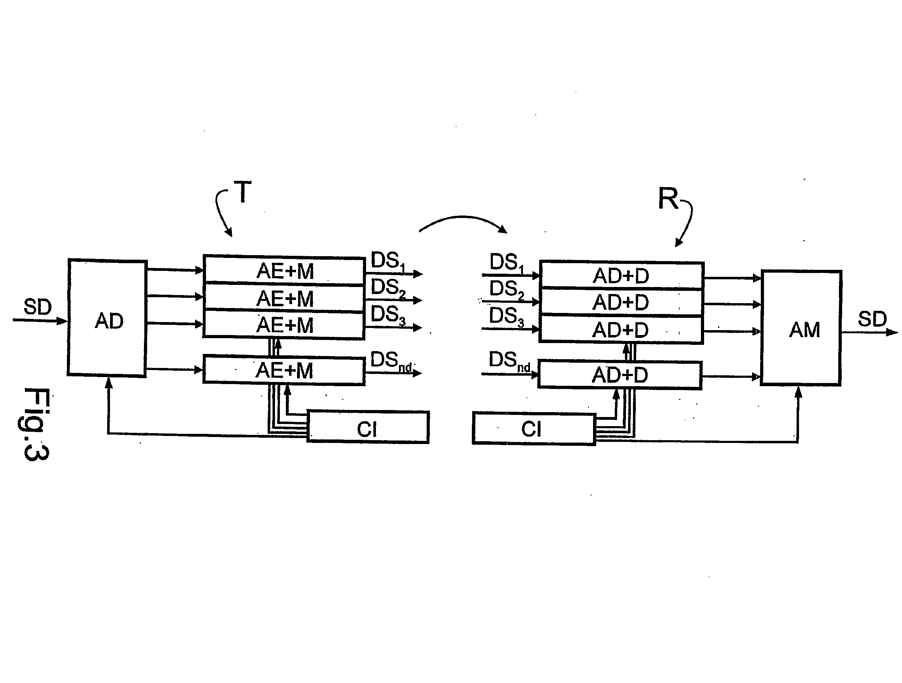

toren $\lambda_i$ und $P_i$ jeweils unterschiedlich ausfallen können. Insbesondere hängen die $P_i$ von der maximalen Sendeleistung ab. Zumeist werden bei niedriger Sendeleistung nur wenige Datenströme bzw. Subkanäle benutzt. Um die dabei verfügbare Kapazität optimal auszunutzen, müssen die Signaldaten in jedem Subkanal mit einer jeweils angepassten Modulation und Kodierung übertragen werden, wodurch sich in jedem Strom auch eine andere Übertragungsrate ergibt (siehe **Figur 3).** Dadurch ist der Signalisierungsaufwand relativ hoch, weil sich aufgrund der schnellen Änderungen der Kanalmatrix **H** letztlich immer auch Änderungen für die $SNR_k^{WF}$ ergeben und folglich die Modulation und Kodierung in allen Subkanälen individuell immer wieder neu angepasst werden muss. Andererseits wird die verfügbare Kapazität so optimal ausgenutzt, das heißt, die resultierende Übertragungsrate ist unter allen Umständen maximal.

Alternativ kann auch vorgesehen sein :

**VI)** Wahl der Subkanalleistungen $P_i$ gemäß

    **b)** mit einer suboptimal-rangadaptiven Unterstützung aller Subkanäle nach dem adaptiven Kanalinversionsprinzip ACI mit **DQ = I** mit **I** = Einheitsmatrix für eine komplette Interferenzbefreiung gemäß

$$P_i = \frac{1}{\lambda_i}, \qquad\qquad (8)$$

wobei die Anzahl $n_d$ der aktuell nutzbaren Subkanäle für eine Modifikation des aktuellen Sendedatenvektors **d** so gewählt wird, dass die spektrale Effizienz K der Übertragung maximal wird, und sich ein konstantes Signal-zu-Rausch-Verhältnis ergibt gemäß

$$SNR_k^{ACI} = \frac{P_{ges}}{\sigma^2 \sum_{i=1}^{n_d} \frac{1}{\lambda_i}} \qquad\qquad (9)$$

Bei der suboptimal-rangadaptiven Unterstützung aller Subkanäle nach dem adaptiven Kanalinversionsprinzip ACI wird nun willkürlich $P_i = 1/\lambda_i$ gesetzt. Dadurch ist das $SNR_k^{ACI}$ für alle Datenströme gleich. Allerdings gilt dann $\gamma \neq 1$. Offensichtlich hängt die Übertragungsqualität empfindlich davon ab, wie viele Datenströme parallel übertragen werden sollen. Hierfür muss ausgehend von der maximal verfügbaren Sendeleistung ein Optimum gefunden werden, so dass der Datendurchsatz maximal ist.

**VII)** Wahl des optimalen Kodier- und Modulationsverfahrens ausgehend von dem ermittelten Signal-zu-Rausch-Verhältnis $SNR_k^{WF}$ oder $SNR_k^{ACI}$ unter Vorgabe einer einzuhaltenden Bitfehlerrate BER, wobei

    im Fall **a)** der optimal-rangadaptiven Kanalunterstützung für jeden der $n_d$ aktiven Subkanäle jeweils das optimale Kodier- und Modulationsverfahren gewählt wird oder

    im Fall **b)** der suboptimal-rangadaptiven Kanalunterstützung für alle $n_d$ aktiven Subkanäle ein gemeinsames Kodier- und Modulationsverfahren gewählt wird.

In beiden Fällen **a)** und **b)** kann ein einfaches Verfahren angegeben werden, wie die beste Kombination aus Raum-Zeit-Kodierung und räumlicher Signalverarbeitung gefunden werden kann. Dabei wird ausgenutzt, dass ausgehend von der Kenntnis von **H** bereits am Sender die zu erwartende Signalqualität nach der Signalverarbeitung am Empfänger vorhergesagt werden kann. Insbesondere können auch Verfahren aus der optischen OFDM-Technik angewendet werden, bei der die Leistungsverteilung auf unterschiedliche Frequenzen - im Gegensatz zum MIMO-Verfahren mit seiner raumabhängigen Leistungsverteilung - zu optimieren ist.

Bei der optimal-rangadaptiven Kanalunterstützung nach dem Water-Filling-Prinzip gemäß Fall **a)** ist die Leistungsverteilung und die Zahl der benutzten Datenströme vorab bekannt. Damit sind auch die Werte von $SNR_k^{WF}$ bekannt. Es muss also nur für jeden Datenstrom das Modulations- und Kodierverfahren herausgesucht werden, das mit der verfügbaren Einzelsendeleistung gerade noch fehlerfrei übertragen werden kann. Es wird also die Übertragungsrate im einzelnen Datenstrom maximiert. Hierfür kann eine Liste erstellt werden, welches SNR für ein bestimmtes Modulations- und Kodierverfahren benötigt wird, um eine bestimmte Bitfehlerrate garantieren zu können. Die Werte von $SNR_k^{WF}$ werden dann jeweils mit den Werten in dieser Liste verglichen und von den möglichen Verfahren wird in jedem Datenstrom das mit der höchsten spektralen Effizienz ausgewählt. Die getroffene Auswahl muss auch dem Empfänger bekannt sein. Im Prinzip könnte diese Auswahl völlig unabhängig ein zweites Mal am Empfänger erfolgen, der prinzipiell über dieselbe Kanalkenntnis verfügt. Zur Sicherheit sollte die am Sender getroffene Auswahl aber auch über einen Signalisierungskanal zum Empfänger übertragen werden, weil die Kanalschätzung an Sender und Empfänger z.B. aufgrund von Rauschen und Gleichkanalstörungen unterschiedlich fehlerbehaftet sein kann.

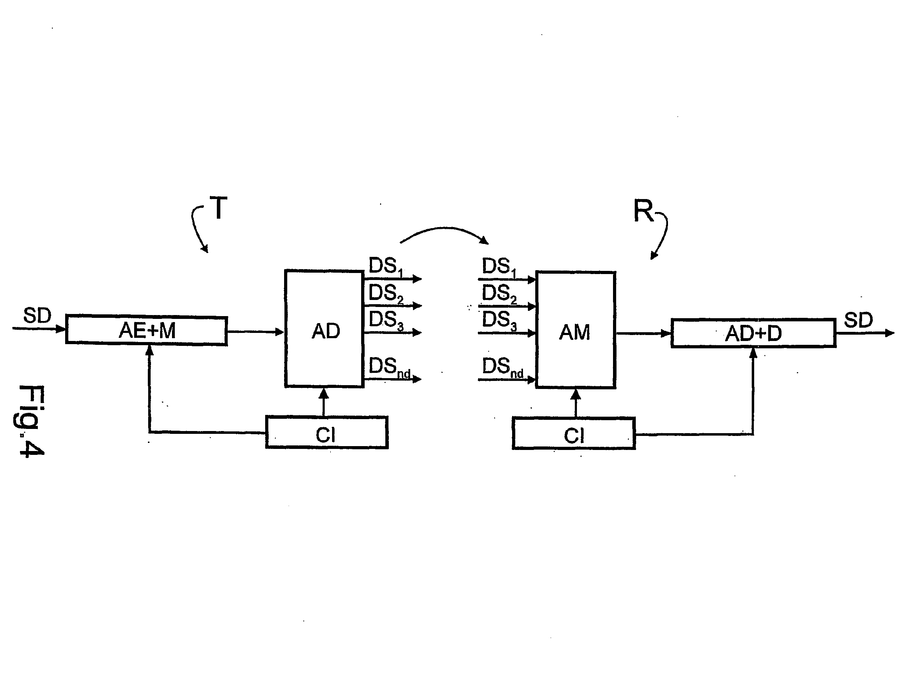

Bei der suboptimal-rangadaptiven Unterstützung aller Subkanäle nach dem adaptiven Kanalinversionsprinzip ACI gemäß Fall **b)** ist das $SNR_k^{ACI}$ in allen Datenströmen gleich, d.h. es kann in allen Datenströmen das gleiche Modulations- und Kodierverfahren verwendet werden. Insbesondere können die Datenströme aus einer gemeinsam kodierten und modulierten Quelle stammen, was den Systemaufbau deutlich vereinfacht (siehe hierzu **Figur 4).** Für diese Vereinfachungen muss allerdings eine etwas niedrigere Übertragungsrate in Kauf genommen werden. Allerdings bleibt die optimale Kombination aus dem gewählten Modulations- und Kodierverfahren und der Anzahl der Datenströme noch aufzufinden. Hierzu kann eine Tabelle erstellt werden, welche Leistung zur Unterstützung eines bestimmten, allen Datenströmen gemeinsamen, Modulations- und Kodierverfahrens, das durch seine spektrale Effizienz K (pro 1 Hz übertragbare Datenmenge je Sekunde) gekennzeichnet ist, im AWGN-Kanal benötigt wird, ohne eine bestimmte Bitfehlerrate zu überschreiten. Abhängig von der Anzahl der Datenströme $n_d$ würde sich nun das Rauschen um den Faktor

$$\sum_{i=1}^{n_d} \frac{1}{\lambda_i}$$ erhöhen. Aus dem Vergleich mit der maximal verfügbaren Gesamtleistung werden aus einer Tabelle für die erforderlichen Sendeleistungen als Funktion von $n_d$ und K zunächst die Kombinationen aus $n_d$ und K ausgewählt, die mit der maximalen Sendeleistung realisierbar sind. Aus dieser Untermenge wird dann die Kombination mit der modifizierten höchsten spektralen Effizienz $n_d \cdot K$ ausgewählt. Auf diese Weise wird die Übertragungsrate maximiert.

Beide Systeme mit einer optimalen oder suboptimalen rangadaptiven Anpassung der genutzten Subkanäle sind prinzipiell außerordentlich adaptiv in Bezug auf beliebige Kanalrealisierungen und können in jedem Kanal nahezu bis an die jeweils theoretisch mögliche Kapazität gelangen, weil die Übertragungsrate maximiert wird. Dabei sind singuläre Kanäle ausdrücklich eingeschlossen. Gleichzeitig können die Fluktuationen in der Sendeleistung unterdrückt werden, die normalerweise bei senderseitiger Vorverarbeitung erzeugt werden. Dafür treten dann aber Fluktuationen in der Übertragungsrate auf, die aufgrund der statistischen Natur des Funkkanals zwangsläufig in Kauf genommen werden müssen. Das sollte aber gerade für Datenanwendungen unproblematisch sein. Aufgrund der stabilen Sendeleistung kann man kostengünstige und energieeffiziente Verstärker einsetzen.

In der vorhergehenden allgemeinen Beschreibung wurde bereits Bezug auf die Figuren genommen. Im Folgenden werden die erwähnten **Ausbildungsformen** des erfindungsgemäßen Signalverarbeitungsverfahrens anhand der schematischen Figuren noch einmal im direkten Zusammenhang erläutert. Dabei zeigt die :

**Figur 1**      das Water-Filling-Prinzip aus dem Stand der Technik,

**Figur 2**      die prinzipielle Systemstruktur für das Signalverarbeitungsverfahren nach der Erfindung,

**Figur 3**      die Systemstruktur für das Signalverarbeitungsverfahren nach der Erfindung mit einer optimal-rangadaptiven Unterstützung der Subkanäle,

**Figur 4**      die Systemstruktur für das Signalverarbeitungsverfahren nach der Erfindung mit einer suboptimal-rangadaptiven Unterstützung der Subkanäle,

**Figur 5**      in einem Diagramm die Bitfehlerrate als Funktion des Quotienten aus Sende- und Rauschleistung an einer Empfangsantenne und

**Figur 6**      in zwei Diagrammen die ohne Kanalkodierung realisierbare spektrale Effizienz nach dem sub-optimalen ACI-Verfahren im Vergleich zur optimalen Waterfilling-Kapazität.

Die **Figur 1** aus dem Stand der Technik zeigt die Leistungsverteilung beim Water-Filling-Prinzip in einem zufälligen Rayleighkanal mit vier Sendern und vier Empfängern ($n_T = n_R = 4$). Im oberen Diagramm ist die Summe aus Sendeleistung P (schraffiert) und Rauschleistung N (schwarz) gezeigt, die für die unterstützten Subkanäle C# (1...4) gleich einer Konstanten, dem sogenannten "Füllstand" μ sein muss. Von dieser Konstante leitet sich auch die Bezeichnung "Water-Filling" ab. Der Füllstand μ hängt von der maximal verfügbaren Sendeleistung ab. Im unteren Diagramm ist die resultierende Leistungsverteilung dargestellt. Der vierte Subkanal kann nicht unterstützt werden und wird folglich abgeschaltet. Es ist aus der Sicht der Summenkapazität günstiger, die vorhandene Leistung nur auf drei Eigenvektoren zu verteilen. Die effektive Dimension des Signalraums reicht für den vierten Datenstrom (in der Terminologie äquivalent mit Subkanal) nicht aus. Dabei ist die Leistungsverteilung auf die drei Subkanäle fest vorgegeben. Die aufgrund des pro Subkanal gewählten Modulations- und Kodierverfahrens jeweils nicht genutzte Sendeleistung in den einzelnen Subkanälen würde somit verloren gehen. Die ungenutzte Sendeleistung kann jedoch auch auf andere Kanäle umverteilt werden, um dort ggf. eine Modulation mit höherer spektraler Effizienz einsetzen zu können. Dabei wird bevorzugt so vorgegangen, dass zunächst die gesamte ungenutzte Leistung in einem Pool aufgefangen wird. Anschließend wird die Leistung im Pool benutzt, um die spektrale Effizienz in einzelnen Kanälen zu erhöhen. Dabei kann berechnet werden, wie viel Leistung jeder Kanal brauchen würde, um die spektrale Effizienz um eine Stufe zu erhöhen. Dabei werden auch vorher bereits abgeschaltete Kanäle mit einbezogen. Der Kanal mit der geringsten Leistungsanforderung, also mit den niedrigsten Kosten, wird bei der Leistungsvergabe bevorzugt. Dieses "least-cost"-Verfahren wird so lange wiederholt, bis die Leistung im Pool nicht mehr ausreicht, um die spektrale Effizienz zu erhöhen.

In der **Figur 2** ist die prinzipielle Struktur eines adaptiven Übertragungssystems zur Realisierung des Signalverarbeitungsverfahrens nach der Erfindung dargestellt. Zu erkennen sind die wesentlichen Charakteristika des beanspruchten Verfahrens. Zunächst ist die Kenntnis der Kanalinformationen CI auf der Sendeseite T und der Empfangsseite R erforderlich. Des weiteren ist die Singulärwertzerlegung SVD auf beiden Seiten des Übertragskanal nach bzw. vor der adaptiven Raum-Zeit-Kodierung bzw. -Dekodierung (ASTC bzw. ASTD) angedeutet durch eine Aufteilung der seriellen Daten SD in eine Anzahl $n_d$ von Datenströmen $DS_1$.... $DS_{nd}$, die aufgrund der SVD korrekt in $n_d$ parallele Subkanäle eingekoppelt werden. Dabei ist die Anzahl $n_d$ der aktuell genutzten Subkanäle in Abhängigkeit von der veränderlichen Kanalmatrix **H** variabel. Die Ermittlung des optimalen $n_d$ erfolgt durch eine ständig wiederholte, leistungsabhängige Überprüfung der Übertragungsqualität der einzelnen Subkanäle, die zu einer Abschaltung oder Zuschaltung einzelner Subkanäle führt. Die Verwendung des Begriffes "adaptiv" ist hier in der Bedeutung "rangadaptiv" bezüglich der Kanalmatrix **H** zu verstehen, deren Rang $n_d$ abhängig ist von den aktuellen Ausbreitungsbedingungen im Funkkanal und auch von den Eigenschaften der verwendeten Antennen. Die Information der $n_d$ genutzten Subkanäle kann zusätzlich zur Empfangsseite übertragen werden. Auf der Empfangsseite sollte zwar unabhängig vom Ergebnis auf der Sendeseite aufgrund der auch dort vorhandenen Kanalkenntnis dasselbe Nutzungsergebnis auftreten. Durch Ungenauigkeiten in der Kanalschätzung ist aber eine zusätzliche Übertragung über einen Signalisierungskanal zum Empfänger sinnvoll.

Vor der Funkübertragung wird der Datenvektor **d**, der sich aus $n_d$-Komponenten zusammensetzt, durch eine lineare Matrix-Vektor-Multiplikation MVM modifiziert. Dabei werden die linke unitäre Transformationsmatrix **V**, die allgemeine Sendematrix **Q** und ein Faktor γ eingeführt. Dieser dient der Beschränkung bzw. Konstanthaltung der maximal zu Verfügung stehenden Sendeleistung. Bei der Wahl von **Q** gibt es keine Einschränkungen, außer dass es sich um eine hermitisch positiv definite Matrix handeln muss. Sollen alle Subkanäle die gleiche Performanz aufweisen, ist **Q** speziell als $\mathbf{D}^{-1}$ zu wählen, wobei **D** die durch die SVD bekannte Diagonalmatrix ist. Nach der Übertragung des Datenvektors **d** erfolgt auf der Empfangsseite ebenfalls eine Modifikation des empfangenen Datenvektors **d'** in Form einer einfachen Matrix-Vektor-Multiplikation MVM. Auf der Empfangsseite R handelt es sich hierbei um die hermitische, rechte unitäre Transformationsmatrix **U^H** und den Faktor γ. Wiederum unter Kanalkenntnis CI erfolgt dann eine Zuordnung in die $n_d$ einzelnen Subkanäle und Weiterleitung zu adaptiven Dekodierung ASTD und Signalausgabe SD.

In **Figur 3** ist die Struktur der adaptiven Raum-Zeitkodierung und -Dekodierung ASTC gemäß Figur 1 für das Signalverarbeitungsverfahren nach der Erfindung mit einer optimal-rangadaptiven Unterstützung aller Subkanäle $P_i >$ 0 nach dem Water-Filling-Prinzip WF dargestellt. Nach dem adaptiven Demultiplexing AD der seriellen Daten SD auf der Sendeseite T wird für jeden Datenstrom $DS_1$..$DS_{nd}$, für den ein anderes Signal-zu-Rausch-Verhältnis $SNR_k^{WF}$ ermittelt wurde, benötigt hier eine eigene Einheit für adaptives Kodieren- und Modulieren AE+M, die jeweils optimal auf das zu erwartende Signal-zu-Rauschverhältnis $SNR_k^{WF}$ für diesen Datenstrom angepasst ist. Analoges gilt für die Empfangsseite R mit einer Einheit für adaptives Demodulieren und Dekodieren AD+D pro Datenstrom $DS_1$..$DS_{nd}$. Die Einheiten für das adaptive Demultiplexing und Multiplexing AD/AM müssen demnach unterschiedliche Symbolalphabete für jeden einzelnen Datenstrom unterstützen. Anhand der Vorgaben aus der Kanalinformation CI ist die Verteilung der spektralen Effizienz (bit/Symbol) auf die einzelnen Datenströme $DS_1$..$DS_{nd}$ frei einstellbar.

Die **Figur 4** zeigt die Struktur der adaptiven Raum-Zeitkodierung und -Dekodierung für das Signalverarbeitungsverfahren nach der Erfindung mit einer suboptimal-rangadaptiven Unterstützung aller Subkanäle nach dem adaptiven Kanalinversionsprinzip ACI. Da hier das Signal-zu-Rauschverhältnis $SNR_k^{ACI}$ für alle aktiven Datenströme $DS_1$..$DS_{nd}$ identisch ist, reicht eine gemeinsame adaptive Kodierung und Modulation AE+M auf der Sendeseite **T** aus.

Da auch die Datenrate in allen Strömen $DS_1..DS_{nd}$ identisch ist, kann man für die Einheiten für das adaptive Demultiplexing und Multiplexing AE+M einfache Umschalter jeweils für das I-und Q-Signal (Real- und Imaginäranteil) verwenden. Im Encoder ist zusätzlich eine nachgeschaltete sample-and-hold Schaltung für beide Signale notwendig. Der Umschalter wird mit dem $n_d$-fachen Symboltakt angesteuert. Die gemeinsame Kodierung und Modulation AE+M erfolgt dann vor dem adaptiven Demultiplexing AD. Analog dazu erfolgt auf der Empfangsseite R nach dem adaptiven Multiplexing AM eine gemeinsame adaptive Dekodierung und Demodulierung AD+D der Datenströme $DS_1..DS_{nd}$. Insgesamt ist die Hardware-Implementierung der Raum-Zeit-Kodierung im Vergleich zum Signalverarbeitungsverfahren nach dem Water-Filling-Prinzip (siehe **Figur 3**) etwas einfacher, allerdings ist auch die Kapazität und damit die Summendatenrate für alle Datenströme $DS_1..DS_{nd}$ etwas niedriger.

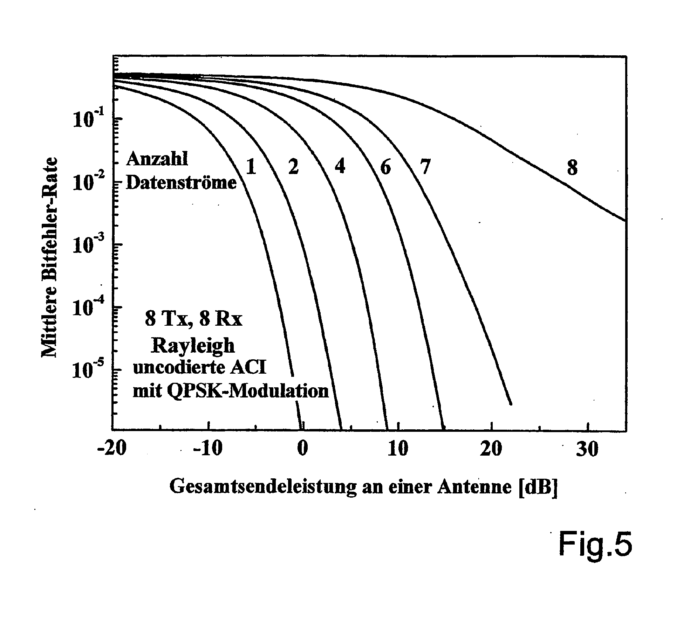

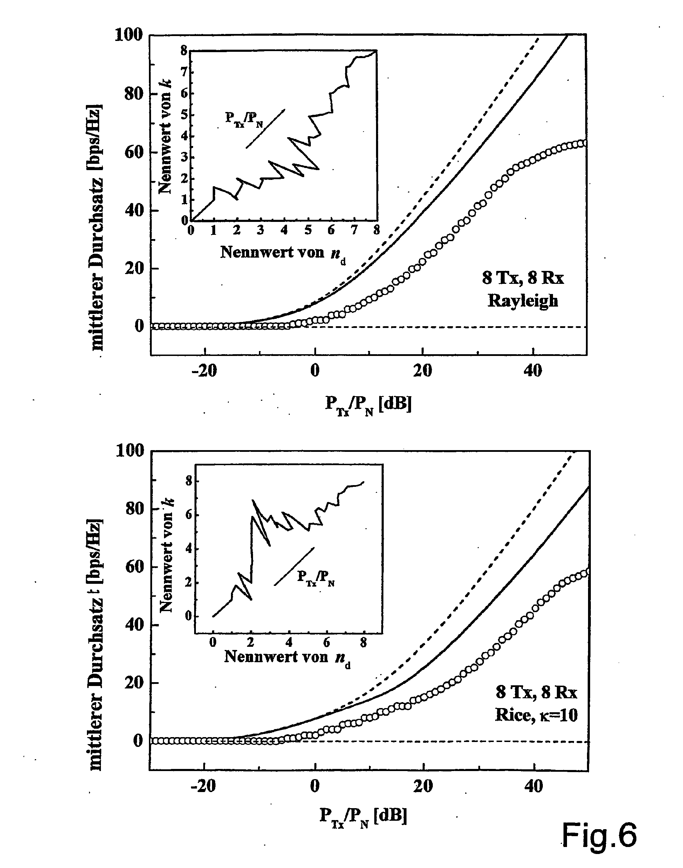

In der **Figur 5** ist die mittlere Bitfehlerrate (average bit error rate) mit adaptiver Kanalinversion bei festgehaltener Sendeleistung für verschiedene Anzahlen von Datenströmen (Kurvenparameter : # of data streams) für die Modulation QPSK (K=2 bps/Hz) über dem Signal-zu-Rausch-Verhältnis (total Tx power/noise at one antenna [dB]) dargestellt. Bei Verwendung einer höherwertigen Modulation (z.B. M-QAM, M=16, K=4 bps/Hz) sehen die Kurven ähnlich aus, sind aber um ca. 6 dB nach rechts verschoben (etwa 3 dB je bps/Hz). Um eine bestimmte Bitfehlerrate zu gewährleisten (z.B. $10^{-5}$), kann sowohl die Anzahl der Datenströme als auch das Modulationsverfahren geändert werden. Die Entscheidung fällt dann für die Kombination, die bei der vorgegebenen Bitfehlerrate die höchste spektrale Effizienz ermöglicht. Diese gemeinsame Optimierung wird in dem Diagramm gemäß **Figur 6** durchgeführt.

Die **Figur 6** zeigt zwei Diagramme zum praktisch ohne Kanalkodierung erzielbaren Durchsatz (Kreis-Kurve) im Vergleich zur theoretisch maximal realisierbaren spektralen Effizienz nach dem sub-optimalen adaptiven Kanalinversions-Verfahren (ACI, durchgezogene Kurve) im Vergleich zum optimalen Waterfilling-Verfahren (WF, strichlierte Kurve) für einen Rayleighkanal (oberes Diagramm) und einen Ricekanal (unteres Diagramm). Aufgetragen ist jeweils der mittlere Durchsatz (mean throughput [bps/Hz]) über dem Signal-zu-Rauschverhältnis $P_{TX}/P_N$ [dB].

Im oberen Diagramm ist die mittlere spektrale Effizienz im Rayleighkanal ohne Sichtverbindung für unkodierte adaptive Kanalinversion gezeigt. Die Punkte geben den tatsächlichen Durchsatz an, gemittelt über 1000 zufällige Kanalrealisierungen. Die Anzahl der Datenströme $n_d$ und die spektrale Effizienz der Modulation K wurden so gewählt, dass das Produkt aus beiden Größen maximal wird und trotzdem noch eine Bitfehlerrate von $10^{-5}$ erreicht wird.

Für das untere Diagramm gilt eine analoge Betrachtungsweise, jedoch für einen Rice-Kanal mit Sichtverbindung. Der Rice-Faktor $\kappa$ beträgt 10 und beschreibt das Verhältnis der Leistungen aus der Sichtverbindung und aus Streusignalen. Das Signal für die Sichtverbindung bezieht sich auf eine willkürlich gewählte Konfiguration mit zwei zirkularen Arrays mit einem Radius von $4\lambda$, die in einer Ebene im Abstand von $70\lambda$ angeordnet sind (hierbei bezeichnet $\lambda$ die Trägerwellenlänge des Signals). Im Vergleich zum RayleighKanal hat der Ricekanal für kleine Sendeleistungen einen reduzierten Rang, was einen flacheren Anstieg bei allen Kurven im Bereich -15...10 dB verursacht. Die adaptive Kanalinversion ACI nach der Erfindung kann sich optimal auf solche Kanäle einstellen und erzielt einen angemessenen Durchsatz.

In beiden Diagrammen gemäß **Figur 6** fällt auf, dass die Kurven für den praktisch erzielbaren Durchsatz (Punkte) genau um 8 dB gegenüber der theoretisch mit der adaptiven Kanalinversion ACI möglichen spektralen Effizienz nach rechts verschoben sind. Das liegt an der völlig unkodierten Übertragung. Mit Hilfe z.B. einer Turbo-Codierung kann man einen Großteil dieser Einbuße wieder wettmachen (ca. 7 dB). Auf diese Weise kann man sehr nahe an die durchgezogene Kurve (Kapazitätsgrenze für die adaptive Kanalinversion ACI) gelangen. Allerdings ist die adaptive Kanalinversion ACI immer noch ein sub-optimales Verfahren (Vergleich mit der gestrichelten Kurve für Waterfilling WF), d.h. die gemeinsame Kodierung "kostet" einen Teil des theoretisch möglichen Datendurchsatzes.

Die kleinen Bilder in den beiden Diagrammen gemäß **Figur 6** zeigen, wie die adaptive Kanalinversion ACI die beiden Parameter $n_d$ (Anzahl der genutzten Subkanäle) und K (spektrale Effizienz) im Mittel wählt, um einen optimalen Durchsatz zu erzielen. Für eine gegebene Kanalstatistik sind diese Kurven reproduzierbar.

**Bezugszeichenliste**

ACI      adaptive Kanalinversion
AD      adaptives Demultiplexing
AD+D      adaptives Demodulieren und Dekodieren
AE+M      adaptives Modulieren und Kodieren
AM      adaptives Multiplexing
ASTC      adaptive Raum-Zeit-Kodierung
ASTD      adaptive Raum-Zeit-Dekodierung
BER      Bitfehlerrate

| CI | Kanalinformationen |
|---|---|
| **D** | Diagonalmatrix |
| **d** | Datenvektor |
| **d'** | empfangener Datenvektor |
| DS | Datenstrom |
| **H** | Kanalmatrix |
| K | spektrale Effizienz der Modulation |
| MVM | Matrix-Vektor-Multiplikation |
| N | Rauschleistung |
| $n_d$ | Anzahl der genutzten Subkanäle/Datenströme |
| $n_T$ | Anzahl Sendeantennen |
| $n_R$ | Anzahl Empfangsantennen |
| P | Sendeleistung |
| **Q** | allgemeine Sendematrix |
| R | Empfangsseite |
| SD | serielle Daten |
| SNR | Signal-zu-Rausch-Verhältnis |
| SVD | Singulärwertzerlegung |
| T | Sendeseite |
| **U** | rechte unitäre Transformationsmatrix |
| **V** | linke unitäre Transformationsmatrix |
| WF | Water Filling |
| $\gamma$ | Faktor zur Beschränkung von P |
| $\mu$ | Füllstand |

**Verzeichnis der zitierten Druckschriften**

[1] G. D. Golden, C. J. Foschini, R.A. Valenzuela, P. W. Wolniansky "Detection algorithm and initial laboratory results using V-BLAST spacetime communication architecture," Electronics Letters, vol. 35, no. 1, 1999.

[2] C. Chuah, G.J. Foschini, R.A. Valenzuela, D. Chizhi, J. Ling and J.M. Kahn, "Capacity Growth of Multi-Element Arrays in Indoor and Outdoor Wireless Channels", Proc. of IEEE Wireless Commun. and Networking Conf., Chicago, IL, Sept. 23-28, 2000.

[3] R.S. Blum, J.H. Winters "On optimum MIMO with Antenna Selection", IEEE Communications Letters, vol. 6, no. 8, 2002, pp. 322-324.

[4] Seong Taek Chung, Angel Lozano, and Howard C. Huang "Approaching Eigenmode BLAST Channel Capacity Using V-BLAST with Rate and Power Feedback", Proc. IEEE VTC Fall 2001, Atlantic City, NJ, 7-11 October 2001

[5] V. Jungnickel et al. "A MIMO WLAN based on Linear Channel Inversion", IEE Coll. on MIMO Systems, 12. Dec. 2001

**Patentansprüche**

1. Bidirektionales Signalverarbeitungsverfahren zur robusten Parallelübertragung von digitalen Sendedatenströmen in mittels einer Raum-Zeit-Kodierung gebildeten regulären und singulären Funkkanälen eines Multiple-Input-Multiple-Output-Funkübertragungssystems, nachfolgend als MIMO-System bezeichnet, mit $n_T$ Sendeantennen und $n_R$ Emfangsantennen mit einer rangadaptiven Anpassung der Datenübertragungsrate an die aktuell gesamtverfügbare Kanalkapazität unter Konstanthaltung der maximalen Sendeleistung $P_{ges}$ als Summe aller Subkanalleistungen $P_i$ mit i = 1...min ($n_T$, $n_R$), wobei die bezüglich der Kanalmatrix **H** rangadaptive Anpassung der Datenübertragungsrate an die aktuell verfügbare Kanalkapazität mittels einer fortlaufend an das aktuelle Kanalverhalten angepassten Variation von $n_d$ aktuell benutzten Subkanäle und der spektralen Effizienz K des zumindest einen gewählten Kodier- und Modulationsverfahrens erfolgt, mit den zyklisch zu wiederholenden Verfahrensschritten:

   **I)** Ermitteln der Kanalmatrix **H** auf der Sende- und der Empfangsseite des MIMO-Systems gemäß

$$y = Hx + n \qquad\qquad (1)$$

mit $y$ = Empfangsvektor
$x$ = Sendevektor
$n$ = Rauschvektor

**II)** Singulärwertzerlegung SVD($H$) = $UDV^H$ der ermittelten Kanalmatrix $H$ mit dem maximalen Rang ($n_T$ x $n_R$) auf der Sendeseite und der Empfangsseite des MIMO-Systems zur Ermittlung der unitären Transformationsmatrizen $U$ und $V$ sowie der Diagonalmatrix $D$ mit den aus den Eigenwerten $\lambda_i$ der Subkanäle abgeleiteten, geordneten Singulärwerten $\sqrt{\lambda_i}$ auf der linken Hauptdiagonalen
**III)** Berechnung des Sendevektors $x$ auf der Sendeseite des MIMO-Systems durch eine lineare Matrix-Vektor-Multiplikation gemäß

$$x = \frac{1}{\gamma} V\, Q\, d \qquad\qquad (2)$$

mit $\dfrac{\nearrow i}{\gamma} = \sqrt{\sum_{i=1}^{n_d} \dfrac{P_i}{P_{ges}}}$ Verstärkungsfaktor zur Beschränkung der Gesamtsendeleistung $P_{ges}$,

mit $V$ = rechte unitäre Transformationsmatrix gemäß II),
mit $Q$ = diagonale Sendematrix mit den Werten $\sqrt{P_i}$ auf der linken Hauptdiagonalen, und
mit $d$ = aktueller Sendedatenvektor mit der veränderlichen Länge $n_d \leq \min(n_T, n_R)$ aus der Unterstützung von $n_d$ Subkanälen zur Parallelübertragung der Sendedatenströme
**IV)** Multiplikation des aktuell empfangenen Sendevektors $\gamma$ auf der Empfangsseite des MIMO-Systems mit $\gamma U^H$, woraus durch Einsetzen von (2) in (1) folgt

$$d^\ast = \gamma U^H y = D \cdot Q \cdot d + \gamma U^H n \qquad\qquad (3)$$

**V)** Ermittlung der $n_d$ Komponenten $d_k^\ast$ nach IV) gemäß

$$d^\ast_k = \sqrt{\lambda_k \cdot P_k} \cdot d_k + \gamma \cdot \tilde{n}_k \qquad\qquad (4)$$

mit $k = 1 \ldots n_d$
**VI)** Wahl der Subkanalleistungen $P_i$
mit einer rangadaptiven Unterstützung aller Subkanäle $P_i > 0$ nach dem Water-Filling-Prinzip WF gemäß

$$P_i = \left( \mu - \frac{\sigma_n^2}{\lambda_i} \right)^+ \qquad\qquad (5)$$

mit $(a)^+ = 0$ für $a = 0$ und $(a)^+ = a$ für $a \neq 0$

mit $\mu$ = Füllfaktor, der so gewählt wird, dass gilt

$$\sum_{i=1}^{n_d} P_i = P_{ges} \Rightarrow \gamma = 1$$

mit $\sigma_n^2$ = Rauschleistung am Empfänger, normierbar auf 1,

woraus sich die Anzahl $n_d$ der aktuell nutzbaren Subkanäle für eine Modifikation des aktuellen Sendedatenvektors d ergibt gemäß

$$n_d = \left|\{i : P_i > 0\}\right| \qquad (6)$$

und woraus sich ein variables Signal-zu-Rausch-Verhältnis, nachfolgend als SNR bezeichnet, ergibt gemäß

$$SNR_k^{WF} = \frac{\lambda_i \cdot P_i}{\sigma_n^2} \qquad (7)$$

**VII)** Wahl des Kodier- und Modulationsverfahrens ausgehend von dem ermittelten Signal-zu-Rausch-Verhältnis

$SNR_k^{WF}$ unter Vorgabe einer einzuhaltenden Bitfehlerrate, nachfolgend als BER bezeichnet, wobei bei der rangadaptiven Kanalunterstützung für jeden der $n_d$ aktiven Subkanäle jeweils das optimale Kodier- und Modulationsverfahren gewählt wird.

**2.** Bidirektionales Signalverarbeitungsverfahren zur robusten Parallelübertragung von digitalen Sendedatenströmen in mittels einer Raum-Zeit-Kodierung gebildeten regulären und singulären Funkkanälen eines Multiple-Input-Multiple-Output-Funkübertragungssystems, nachfolgend als MIMO-System bezeichnet, mit $n_T$ Sendeantennen und $n_R$ Emfangsantennen mit einer rangadaptiven Anpassung der Datenübertragungsrate an die aktuell gesamtverfügbare Kanalkapazität unter Konstanthaltung der maximalen Sendeleistung $P_{ges}$ als Summe aller Subkanalleistungen $P_i$ mit i = 1...min ($n_T$, $n_R$), wobei die bezüglich der Kanalmatrix **H** rangadaptive Anpassung der Datenübertragungsrate an die aktuell verfügbare Kanalkapazität mittels einer fortlaufend an das aktuelle Kanalverhalten angepassten Variation von $n_d$ aktuell benutzten Subkanäle und der spektralen Effizienz K des zumindest einen gewählten Kodier- und Modulationsverfahrens erfolgt, mit den zyklisch zu wiederholenden Verfahrensschritten:

**I)** Ermitteln der Kanalmatrix **H** auf der Sende- und der Empfangsseite des MIMO-Systems gemäß

$$\mathbf{y} = \mathbf{Hx} + \mathbf{n} \qquad (1)$$

mit **y** = Empfangsvektor
**x** = Sendevektor
**n** = Rauschvektor

**II)** Singulärwertzerlegung SVD(**H**) = **UDV**$^H$ der ermittelten Kanalmatrix **H** mit dem maximalen Rang ($n_T$ x $n_R$) auf der Sendeseite und der Empfangsseite des MIMO-Systems zur Ermittlung der unitären Transformationsmatrizen **U** und **V** sowie der Diagonalmatrix **D** mit den aus den Eigenwerten $\lambda_i$ der Subkanäle abgeleiteten,

geordneten Singulärwerten $\sqrt{\lambda_i}$ auf der linken Hauptdiagonalen

**III)** Berechnung des Sendevektors **x** auf der Sendeseite des MIMO-Systems durch eine lineare Matrix-Vektor-Multiplikation gemäß

$$x = \frac{1}{\gamma} V \ Q \ d \qquad (2)$$

mit $\angle i$ $\quad \gamma = \sqrt{\sum_{i=1}^{n_d} \frac{P_i}{P_{ges}}}$ Verstärkungsfaktor zur Beschränkung der Gesamtsendeleistung $P_{ges}$,

mit **V** = rechte unitäre Transformationsmatrix gemäß II),

mit **Q** = diagonale Sendematrix mit den Werten $\sqrt{P_i}$ auf der linken Hauptdiagonalen, und

mit **d** = aktueller Sendedatenvektor mit der veränderlichen Länge $n_d \leq$ min $(n_T, n_R)$ aus der Unterstützung von $n_d$ Subkanälen zur Parallelübertragung der Sendedatenströme

**IV)** Multiplikation des aktuell empfangenen Sendevektors $\gamma$ auf der Empfangsseite des MIMO-Systems mit $\gamma U^H$, woraus durch Einsetzen von (2) in (1) folgt

$$d^* = \gamma U^H y = D \cdot Q \cdot d + \gamma U^H n \qquad (3)$$

**V)** Ermittlung der $n_d$ Komponenten $d_k^*$ nach IV) gemäß

$$d^*_k = \sqrt{\lambda_k \cdot P_k} \cdot d_k + \gamma \cdot \tilde{n}_k \qquad (4)$$

mit k = 1...$n_d$

**VI)** Wahl der Subkanalleistungen $P_i$ mit einer rangadaptiven Unterstützung aller Subkanäle nach dem adaptiven Kanalinversionsprinzip, nachfolgend als ACI bezeichnet, mit **DQ** = **I** mit **I** = Einheitsmatrix für eine komplette Interferenzbefreiung gemäß

$$P_i = \frac{1}{\lambda_i}, \qquad (8)$$

wobei die Anzahl $n_d$ der aktuell nutzbaren Subkanäle für eine Modifikation des aktuellen Sendedatenvektors d so gewählt wird, dass die spektrale Effizienz K der Übertragung maximal ist, und sich ein konstantes Signal-zu-Rausch-Verhältnis in den Einzelkanälen ergibt gemäß

$$SNR_k^{ACI} = \frac{P_{ges}}{\sigma^2 \sum_{i=1}^{n_d} \frac{1}{\lambda_1}} \qquad (9)$$

**VII)** Wahl des Kodier- und Modulationsverfahrens ausgehend von dem ermittelten Signal-zu-Rausch-Verhältnis $SNR_k^{ACI}$ unter Vorgabe einer einzuhaltenden Bitfehlerrate, nachfolgend als BER bezeichnet, wobei bei der rangadaptiven Kanalunterstützung für alle $n_d$ aktiven Subkanäle ein gemeinsames Kodier- und Modulationsverfahren gewählt wird.

3. Bidirektionales Signalverarbeitungsverfahren nach Anspruch 1 mit einer Wahl des Kodier- und Modulationsverfahrens gemäß Verfahrensschritt VII) durch einen numerischen Einzelvergleich der ermittelten Werte $SNR_k^{WF}$ für die aktuell aktivierten Subkanäle mit den SNR-Werten, die für ein bestimmtes Kodier- und Modulationsverfahren benötigt werden, das mit den aktuell verfügbaren Subkanalleistungen $P_i$ die Einhaltung der vorgegebenen Bitfehlerrate BER ermöglicht.

4. Bidirektionales Signalverarbeitungsverfahren nach Anspruch 2 mit einer Wahl des Kodier- und Modulationsverfahrens gemäß Verfahrensschritt VII) durch einen numerischen Gesamtvergleich des ermittelten Werts $SNR_k^{ACI}$ für alle aktuell aktivierten Subkanäle mit einem SNR-Werten, die für ein bestimmtes Kodier- und Modulationsverfahren benötigt werden, das mit der maximalen Sendeleistung $P_{ges}$ die Einhaltung der vorgegebenen Bitfehlerrate BER ermöglicht, wobei anhand der aktuellen, senderseitigen Singulärwertzerlegung eine Leistungserhöhung durch die Unterstützung der aktuell aktivierten Subkanäle einbezogen wird.

5. Bidirektionales Signalverarbeitungsverfahren nach einem der Ansprüche 1 bis 4 mit einer Übertragung der sendeseitig ermittelten aktuellen Anzahl $n_d$ von aktivierten Subkanälen über einen Signalisierungskanal auf die Empfangsseite.

6. Bidirektionales Signalverarbeitungsverfahren nach einem der Ansprüche 1 bis 5 mit einer sendeseitig vorgelagerten Kompensation von statistischen Schwankungen in der maximalen Sendeleistung des MIMO-Systems.

7. Bidirektionales Signalverarbeitungsverfahren nach einem der Ansprüche 1 bis 6 mit einer Wahl der Sendekovarianzmatrix $Q = D^{-1}$ zur Anpassung aller aktuell aktiven Subkanäle an eine gleiche Performanz, wobei sich der Faktor $\gamma$ ergibt zu :

$$\gamma = \sqrt{\sum_{i=1}^{n_d} \frac{1}{\lambda_i}} \qquad .$$

8. Bidirektionales Signalverarbeitungsverfahren nach einem der Ansprüche 1 bis 7 mit einem MIMO-System, das im Time-Division-Duplex-Übertragungsverfahren arbeitet.

9. Bidirektionales Signalverarbeitungsverfahren nach einem der Ansprüche 1 bis 8 mit einem MIMO-System, bei dem die Kanalschätzung in der Aufwärtsstrecke für die Signalverarbeitung in der Abwärtsstrecke wiederverwendet wird und umgekehrt.

10. Bidirektionales Signalverarbeitungsverfahren nach einem der Ansprüche 1 bis 9 mit einer senderseitig gemeinsam kodierten und modulierten Quelle für alle parallel zu übertragenden Datenströme.

11. Bidirektionales Signalverarbeitungsverfahren nach einem der Ansprüche 1 bis 10 mit einer Zerlegung des Sende- und Empfangssignals mittels des bekannten OFDM-Verfahrens in mehrere Unterträgersignale, wobei für jedes Unterträgersignal das bidirektionale Signalverarbeitungsverfahren ausgeführt wird.

**Claims**

1. Bidirectional signal processing method for the robust parallel transmission of digital transmit data streams in regular and singular radio channels, formed by means of space-time coding, of a multiple input-multiple output radio transmission system, referred to below as a MIMO system, having $n_T$ transmit antennas and $n_R$ receive antennas with a rank-adaptive matching of the data transmission rate to the total currently available channel capacity while keeping constant the maximum transmit power $P_{tot}$ as the sum of all subchannel powers $P_i$ where i = 1...min ($n_T$, $n_R$), with the rank-adaptive matching of the data transmission rate in respect of the channel matrix **H** to the currently available channel capacity being performed by means of a variation, continuously adjusted to the current channel behaviour, of $n_d$ currently used subchannels and the spectral efficiency K of the at least one selected coding and modulation method, comprising the following method steps which are to be cyclically repeated:

**I)** Determination of the channel matrix **H** on the transmit and the receive side of the MIMO system according to

$$\mathbf{y \ = \ Hx \ +n} \qquad\qquad (1)$$

where **y** = receive vector
**x** = transmit vector
**n** = noise vector

**II)** Singular value decomposition SVD**(H)** = **UDV**$^H$ of the determined channel matrix **H** with the maximum rank ($n_T$ x $n_R$) on the transmit side and the receive side of the MIMO system for determining the unitary transformation matrices **U** and **V** as well as the diagonal matrix **D** containing the ordered singular values $\sqrt{\lambda_i}$ derived from the eigenvalues $\lambda_i$ of the subchannels on the left main diagonal.
**III)** Calculation of the transmit vector **x** on the transmit side of the MIMO system by means of a linear matrix-vector multiplication according to

$$\mathbf{x \ = \ \frac{1}{\gamma} V \ Q \ d} \qquad\qquad (2)$$

where $\gamma = \sqrt{\sum_{i=1}^{n_d} \dfrac{P_i}{P_{tot}}} = $ = amplification factor for limiting the total transmit power $P_{tot}$,

where **V** = right unitary transformation matrix according to II)
where **Q** = diagonal transmit matrix containing the values $\sqrt{P_i}$ on the left main diagonal and
where **d** = current transmit data vector containing the variable length $n_d \le$ min ($n_T$, $n_R$) from the support of $n_d$ subchannels for the parallel transmission of the transmit data streams
**IV)** Multiplication of the currently received transmit vector **y** on the receive side of the MIMO system where $\gamma$**U**$^H$, from which through insertion of (2) into (1) it follows

$$\mathbf{d^\star \ = \ \gamma U^H y \ = \ D \cdot Q \cdot d \ + \ \gamma U^H n} \qquad\qquad (3)$$

**V)** Determination of the $n_d$ components $d_k^\star$ from IV) according to

$$d^\star{}_k \ = \sqrt{\lambda_k \cdot P_k \cdot d_k + \gamma \cdot \widetilde{n}_k} \qquad\qquad (4)$$

where k = 1...$n_d$

**VI)** Selection of the subchannel powers $P_i$
with rank-adaptive support for all subchannels $P_i > 0$ based on the water-filling principle WF according to

$$P_i = \left( \mu - \frac{\sigma_n^2}{\lambda_i} \right)^+ \qquad\qquad (5)$$

where $(a)^+ = 0$ for $a = 0$ and $(a)^+ = a$ for $a \neq 0$
where $\mu$ = fill factor which is chosen such that

$$\sum_{i=1}^{n_d} P_i = P_{tot} \Rightarrow \gamma = 1 \;\; \texttt{holds}$$

where $\sigma_n^2$ = noise power at the receiver (normalisable to 1)
which yields the number $n_d$ of the currently usable subchannels for a modification of the current transmit data vector **d** according to

$$n_d = \left| \{i : P_i > 0\} \right| \qquad\qquad (6)$$

and which yields a variable signal-to-noise ratio, referred to below as SNR, according to

$$SNR_k^{WF} = \frac{\lambda_i \cdot P_i}{\sigma_n^2} \qquad\qquad (7)$$

**VII)** Selection of the coding and modulation method based on the determined signal-to-noise ratio $SNR_k^{WF}$
with specification of a bit error rate, referred to below as BER, that is to be complied with, where in the case of the rank-adaptive channel support, the optimal coding and modulation method is selected in each case for each of the $n_d$ active subchannels.

2. Bidirectional signal processing method for the robust parallel transmission of digital transmit data streams in regular and singular radio channels, formed by means of space-time coding, of a multiple input-multiple output radio transmission system, referred to below as a MIMO system, having $n_T$ transmit antennas and $n_R$ receive antennas with a rank-adaptive matching of the data transmission rate to the total currently available channel capacity while keeping constant the maximum transmit power $P_{tot}$ as the sum of all subchannel powers $P_i$ where $i = 1...\min (n_T, n_R)$, with the rank-adaptive matching of the data transmission rate in respect of the channel matrix **H** to the currently available channel capacity being performed by means of a variation, continuously adjusted to the current channel behaviour, of $n_d$ currently used subchannels and the spectral efficiency K of the at least one selected coding and modulation method, comprising the following method steps which are to be cyclically repeated:

   **I)** Determination of the channel matrix **H** on the transmit and the receive side of the MIMO system according to

$$y = Hx + n \qquad\qquad (1)$$

where **y** = receive vector
**x** = transmit vector
**n** = noise vector

**II)** Singular value decomposition SVD**(H)** = **UDV**$^H$ of the determined channel matrix **H** with the maximum rank ($n_T$ x $n_R$) on the transmit side and the receive side of the MIMO system for determining the unitary transformation matrices **U** and **V** as well as the diagonal matrix **D** containing the ordered singular values $\sqrt{\lambda_i}$ derived from the eigenvalues $\lambda_i$ of the subchannels on the left main diagonal.
**III)** Calculation of the transmit vector **x** on the transmit side of the MIMO system by means of a linear matrix-vector multiplication according to

$$x = \frac{1}{\gamma} V \, Q \, d \qquad\qquad (2)$$

where $\gamma = \sqrt{\sum_{i=1}^{n_d} \frac{P_i}{P_{tot}}} =$ = amplification factor for limiting the total transmit power $P_{tot}$,

where **V** = right unitary transformation matrix according to II)
where **Q** = diagonal transmit matrix containing the values $\sqrt{P_i}$ on the left main diagonal and
where **d** = current transmit data vector containing the variable length $n_d \leq$ min ($n_T$, $n_R$) from the support of $n_d$ subchannels for the parallel transmission of the transmit data streams
**IV)** Multiplication of the currently received transmit vector **y** on the receive side of the MIMO system where $\gamma$**U**$^H$, from which through insertion of (2) into (1) it follows

$$d* = \gamma U^H y = D \cdot Q \cdot d + \gamma U^H n \qquad\qquad (3)$$

**V)** Determination of the $n_d$ components $d_k*$ from IV) according to

$$d*_k = \sqrt{\lambda_k \cdot P_k \cdot d_k + \gamma \cdot \tilde{n}_k} \qquad\qquad (4)$$

where k = 1...$n_d$
**VI)** Selection of the subchannel powers $P_i$ with rank-adaptive support for all subchannels according to the adaptive channel inversion principle, referred to below as ACI, where **DQ = I** where **I** = unity matrix for a complete interference cancellation according to

$$P_i = \frac{1}{\lambda_i}, \qquad\qquad (8)$$

where the number $n_d$ of the currently usable subchannels is selected for a modification of the current transmit data vector **d** such that the spectral efficiency K of the transmission is maximised and a constant signal-to-noise ratio is produced in the individual channels according to

$$SNR_k^{ACI} = \frac{P_{tot}}{\sigma^2 \sum_{i=1}^{n_d} \frac{1}{\lambda_1}} \qquad (9)$$

**VII)** Selection of the coding and modulation method based on the determined signal-to-noise ratio $SNR_k^{ACI}$ with specification of a bit error rate, referred to below as BER, that is to be complied with, where in the case of the rank-adaptive channel support, a common coding and modulation method is selected for all $n_d$ active subchannels.

3. Bidirectional signal processing method according to claim 1, comprising a selection of the coding and modulation method according to method step VII) by means of an individual numerical comparison of the determined values $SNR_k^{WF}$ for the currently activated subchannels with the SNR values which are required for a specific coding and modulation method which enables the specified bit error rate BER to be complied with using the currently available subchannel powers $P_i$.

4. Bidirectional signal processing method according to claim 2, comprising a selection of the coding and modulation method according to method step VII) by means of an overall numerical comparison of the determined value $SNR_k^{ACI}$ for all currently activated subchannels with an SNR value which is required for a specific coding and modulation method which enables the specified bit error rate BER to be complied with using the maximum transmit power $P_{tot}$, with a power increase being included through the support for the currently activated subchannels on the basis of the current, transmitter-side singular value decomposition.

5. Bidirectional signal processing method according to one of claims 1 to 4, comprising a transmission of the current number $n_d$ of activated subchannels, as determined on the transmit side, to the receive side via a signalling channel.

6. Bidirectional signal processing method according to one of claims 1 to 5, comprising a front-end compensation on the transmit side of statistical fluctuations in the maximum transmit power of the MIMO system.

7. Bidirectional signal processing method according to one of claims 1 to 6, comprising a selection of the transmit covariance matrix $Q = D^{-1}$ for matching all currently active subchannels to an identical performance, where the factor $\gamma$ is yielded as:

$$\gamma = \sqrt{\sum_{i=1}^{n_d} \frac{1}{\lambda_1}}$$

8. Bidirectional signal processing method according to one of claims 1 to 7, comprising a M1MO system which operates according to the Time Division Duplex transmission method.

9. Bidirectional signal processing method according to one of claims 1 to 8, comprising a MIMO system in which the channel estimation in the uplink is reused for the signal processing in the downlink and vice versa.

**10.** Bidirectional signal processing method according to one of claims 1 to 9, comprising a source commonly coded and modulated on the transmitter side for all the data streams to be transmitted in parallel.

**11.** Bidirectional signal processing method according to one of claims 1 to 10, comprising a decomposition of the transmit and receive signal by means of the known OFDM method into a plurality of subcarrier signals, with the bidirectional signal processing method being performed for each subcarrier signal.

**Revendications**

**1.** Procédé de traitement de signaux bidirectionnel pour la transmission en parallèle robuste de flux numériques de données d'émission dans des canaux radio réguliers et singuliers, constitués au moyen d'un codage espace - temps, d'un système de transmission radio à entrées multiples et à sorties multiples, ci-après désigné par «système MIMO», avec $n_T$ antennes d'émission et $n_R$ antennes de réception avec une adaptation, adaptative au rang, du débit de transmission de données à la capacité de canal actuellement disponible au total, la puissance d'émission maximale $P_{ges}$ en tant que somme de toutes les puissances de sous-canaux $P_i$ avec i = 1 ... min $(n_T, n_R)$ étant maintenue constante, l'adaptation, adaptative au rang par rapport à la matrice de canal **H,** du débit de transmission de données à la capacité de canal actuellement disponible se faisant au moyen d'une variation, adaptée en continu au comportement actuel du canal, de $n_d$ sous-canaux actuellement utilisés et de l'efficacité spectrale K de l'au moins un procédé choisi de codage et de modulation, avec les étapes de procédé à répéter cycliquement:

I) Détermination de la matrice de canal **H** du côté émetteur et du côté récepteur du système MIMO selon

$$y = Hx + n \qquad\qquad (1)$$

avec **y** = vecteur de réception
**x** = vecteur d'émission
**n** = vecteur de bruit.

II) Décomposition en valeurs singulières SVD(**H**) = **UDV**$^H$ de la matrice de canal **H** déterminée avec le rang maximal $(n_T$ x $n_R)$ du côté émetteur et du côté récepteur du système MIMO pour déterminer les matrices de transformation unitaires **U** et **V** ainsi que la matrice diagonale **D** avec les valeurs singulières $\sqrt{\lambda_i}$ ordonnées

dérivées des valeurs propres $\lambda i$ des sous-canaux sur la diagonale principale gauche.
III) Calcul du vecteur d'émission **x** du côté émetteur du système MIMO par une multiplication linéaire matrice - vecteur selon

$$x = \frac{1}{\gamma} V Q d \qquad (2)$$

avec $\gamma = \sqrt{\sum_{i=1}^{n_d} \dfrac{P_i}{P_{ges}}}$ = facteur d'amplification pour limiter la puissance d'émission totale $P_{ges}$,

avec **V =** matrice de transformation unitaire droite selon II)

avec **Q =** matrice d'émission diagonale avec les valeurs $\sqrt{P_i}$ sur la diagonale principale gauche et

avec **d** = vecteur actuel de données d'émission avec la longueur variable $n_d \leq$ min $(n_T, n_R)$ provenant du support de $n_d$ sous-canaux pour la transmission en parallèle des flux de données d'émission.
IV) Multiplication du vecteur d'émission **y** actuellement reçu du côté récepteur du système MIMO avec $\gamma$**U**$^H$, ce dont résulte, par insertion de (2) dans (1):

$$d* = \gamma U^H y = D \cdot Q \cdot d + \gamma U^H n \qquad (3).$$

V) Détermination des $n_d$ composantes $d_k*$ selon IV) selon

$$d_k^* = \sqrt{\lambda_k \cdot P_k} \cdot d_k + \gamma \cdot \tilde{n}_k \qquad (4)$$

avec k = 1 ... $n_d$
VI) Choix des puissances de sous-canaux $P_i$
avec un support de tous les sous-canaux $P_i > 0$, adaptatif au rang, selon le principe du water-filling WF selon

$$P_i = \left( \mu - \frac{\sigma_n^2}{\lambda_i} \right)^+ \qquad (5)$$

avec (a) + = 0 pour a = 0 et (a)+ = a pour a $\neq$ 0
avec $\mu$ = facteur de remplissage, choisi tel que

$$\sum_{i=1}^{n_d} P_i = P_{ges} \Rightarrow \gamma = 1$$

avec $\sigma_n^2$ = puissance du bruit au récepteur, normalisable sur 1

ce dont résulte le nombre $n_d$ des sous-canaux actuellement utilisables pour une modification du vecteur actuel de données d'émission **d** selon

$$n_d = \left| \left\{ i : p_i > 0 \right\} \right| \qquad (6)$$

et ce dont il résulte un rapport signal / bruit variable, ci-après désigné par «SNR», selon

$$SNR_k^{WF} = \frac{\lambda_i \cdot P_i}{\sigma_n^2}. \qquad (7)$$

VII) Choix du procédé optimal de codage et de modulation à partir du rapport signal / bruit déterminé $SNR_k^{WF}$ avec spécification d'un taux d'erreur binaire, ci-après désigné par «BER», à respecter, le procédé optimal de codage et de modulation étant respectivement choisi pour chacun des $n_d$ sous-canaux actifs dans le cas du support de canal adaptatif au rang.

2. Procédé de traitement de signaux bidirectionnel pour la transmission en parallèle robuste de flux numériques de données d'émission dans des canaux radio réguliers et singuliers, constitués au moyen d'un codage espace - temps, d'un système de transmission radio à entrées multiples et à sorties multiples, ci-après désigné par «système MIMO», avec $n_T$ antennes d'émission et $n_R$ antennes de réception avec une adaptation, adaptative au rang, du débit de transmission de données à la capacité de canal actuellement disponible au total, la puissance d'émission maximale $P_{ges}$ en tant que somme de toutes les puissances de sous-canaux $P_i$ avec $i = 1 \ldots \min(n_T, n_R)$ étant maintenue constante, l'adaptation, adaptative au rang par rapport à la matrice de canal **H,** du débit de transmission de données à la capacité de canal actuellement disponible se faisant au moyen d'une variation, adaptée en continu au comportement actuel du canal, de $n_d$ sous-canaux actuellement utilisés et de l'efficacité spectrale K de l'au moins un procédé choisi de codage et de modulation, avec les étapes de procédé à répéter cycliquement:

I) Détermination de la matrice de canal **H** du côté émetteur et du côté récepteur du système MIMO selon

$$\mathbf{y} = \mathbf{Hx} + \mathbf{n} \qquad\qquad (1)$$

avec **y** = vecteur de réception
**x** = vecteur d'émission
**n** = vecteur de bruit.

II) Décomposition en valeurs singulières SVD(**H**) = $\mathbf{UDV}^H$ de la matrice de canal **H** déterminée avec le rang maximal ($n_T$ x $n_R$) du côté émetteur et du côté récepteur du système MIMO pour déterminer les matrices de transformation unitaires **U** et **V** ainsi que la matrice diagonale **D** avec les valeurs singulières $\sqrt{\lambda_i}$ ordonnées dérivées des valeurs propres $\lambda_i$ des sous-canaux sur la diagonale principale gauche.

III) Calcul du vecteur d'émission **x** du côté émetteur du système MIMO par une multiplication linéaire matrice - vecteur selon

$$\mathbf{x} = \frac{1}{\gamma}\mathbf{V\,Q\,d} \qquad\qquad (2)$$

avec $\gamma = \sqrt{\sum_{i=1}^{n_d} \dfrac{P_i}{P_{ges}}}$ = facteur d'amplification pour limiter la puissance d'émission totale $P_{ges}$,

avec **V** = matrice de transformation unitaire droite selon II)

avec **Q** = matrice d'émission diagonale avec les valeurs $\sqrt{\tilde{P_i}}$ sur la diagonale principale gauche et

avec **d** = vecteur actuel de données d'émission avec la longueur variable $n_d \leq \min(n_T, n_R)$

provenant du support de $n_d$ sous-canaux pour la transmission en parallèle des flux de données d'émission.

IV) Multiplication du vecteur d'émission **y** actuellement reçu du côté récepteur du système MIMO avec $\gamma\mathbf{U}^H$, ce dont résulte, par insertion de (2) dans (1):

$$\mathbf{d^{\star}} = \gamma\mathbf{U}^H\mathbf{y} = \mathbf{D}\cdot\mathbf{Q}\cdot\mathbf{d} + \gamma\mathbf{U}^H\mathbf{n} \qquad\qquad (3).$$

V) Détermination des $n_d$ composantes $d_k^{*}$ selon IV) selon

$$d_k^* = \sqrt{\lambda_k \cdot P_k} \cdot d_k + \gamma \cdot \tilde{n}_k \qquad (4)$$

avec k = 1 ... $n_d$

VI) Choix des puissances de sous-canaux $P_i$ avec un support de tous les sous-canaux, adaptatif au rang, selon le principe de l'inversion de canal adaptative, ci-après désigné par «ACI», avec **DQ** = **I** avec **I** = matrice unitaire pour un affranchissement complet des interférences selon

$$P_i = \frac{1}{\lambda_i}, \qquad (8)$$

le nombre $n_d$ des sous-canaux actuellement utilisables pour une modification du vecteur actuel de données d'émission **d** étant choisi tel que l'efficacité spectrale K de la transmission est maximale et qu'on obtient dans les canaux individuels un rapport constant signal / bruit selon

$$SNR_k^{ACI} = \frac{P_{ges}}{\sigma^2 \sum_{i=1}^{n_d} \frac{1}{\lambda_i}} \qquad (9)$$

VII) Choix du procédé de codage et de modulation à partir du rapport signal / bruit déterminé $SNR_k^{ACI}$ avec spécification d'un taux d'erreur binaire, ci-après désigné par «BER», à respecter, un procédé commun de codage et de modulation étant choisi pour tous les $n_d$ sous-canaux actifs dans le cas du support de canal adaptatif au rang.

**3.** Procédé de traitement de signaux bidirectionnel selon la revendication 1, avec un choix du procédé de codage et de modulation selon l'étape VII) du procédé par une comparaison numérique individuelle des valeurs déterminées $SNR_k^{WF}$ pour les sous-canaux actuellement activés avec les valeurs SNR qui sont requises pour un procédé de codage et de modulation déterminé qui, avec les puissances de sous-canaux $P_i$ actuellement disponibles, permet de respecter le taux d'erreur binaire BER spécifié.

**4.** Procédé de traitement de signaux bidirectionnel selon la revendication 2, avec un choix du procédé de codage et de modulation selon l'étape VII) du procédé par une comparaison numérique globale des valeurs déterminées $SNR_k^{ACI}$ pour tous les sous-canaux actuellement activés avec des valeurs SNR qui sont requises pour un procédé de codage et de modulation déterminé qui, avec la puissance d'émission maximale $P_{ges}$, permet de respecter le taux d'erreur binaire BER spécifié, une augmentation de la puissance par le support des sous-canaux actuellement activés étant prise en compte à l'aide de la décomposition actuelle en valeurs singulières côté émetteur.

**5.** Procédé de traitement de signaux bidirectionnel selon l'une des revendications 1 à 4, avec une transmission du nombre $n_d$ de sous-canaux activés actuel, déterminé côté émetteur, via un canal de signalisation vers le côté récepteur.

**6.** Procédé de traitement de signaux bidirectionnel selon l'une des revendications 1 à 5, avec une compensation, en amont côté émetteur, de fluctuations statistiques dans la puissance d'émission maximale du système MIMO.

7. Procédé de traitement de signaux bidirectionnel selon l'une des revendications 1 à 6, avec un choix de la matrice de covariance d'émission $Q = D^{-1}$ pour adaptation de tous les sous-canaux actuellement actifs à une même performance, le facteur $\gamma$ étant:

$$\gamma = \sqrt{\sum_{i=1}^{n_A} \frac{1}{\lambda_i}}$$

8. Procédé de traitement de signaux bidirectionnel selon l'une des revendications 1 à 7, avec un système MIMO qui fonctionne dans le procédé de transmission Time Division Duplex.

9. Procédé de traitement de signaux bidirectionnel selon l'une des revendications 1 à 8, avec un système MIMO dans lequel l'estimation de canal sur la voie montante est réutilisée pour le traitement de signaux sur la voie descendante et inversement.

10. Procédé de traitement de signaux bidirectionnel selon l'une des revendications 1 à 9, avec une source codée et modulée en commun côté émetteur pour tous les flux de données à transmettre en parallèle.

11. Procédé de traitement de signaux bidirectionnel selon l'une des revendications 1 à 10, avec une décomposition du signal d'émission et de réception au moyen du procédé OFDM connu en plusieurs signaux sous-porteurs, le procédé de traitement de signaux bidirectionnel étant exécuté pour chaque signal sous-porteur.

prior art

Fig.1

Fig.2

Fig.3

Fig.4

Fig.5

Fig.6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **KIESSLING M et al.** Short-term and long-term diagonalization of correlated MIMO channels with adaptive modulation. *CONFERENCE PROCEEDINGS: 13TH IEEE INTERNATIONAL SYMPOSIUM ON PERSONAL INDOOR,* 15. September 2002, vol. 2, 593-597

- **G. D. GOLDEN ; C. J. FOSCHINI ; R.A. VALENZUELA ; P. W. WOLNIANSKY.** Detection algorithm and initial laboratory results using V-BLAST spacetime communication architecture. *Electronics Letters,* vol. 35 (1

- **C. CHUAH ; G.J. FOSCHINI ; R.A. VALENZUELA ; D. CHIZHI ; J. LING ; J.M. KAHN.** Capacity Growth of Multi-Element Arrays in Indoor and Outdoor Wireless Channels. *Proc. of IEEE Wireless Commun. and Networking Conf,* 23. September 2000

- On optimum MIMO with Antenna Selection. **R.S. BLUM ; J.H. WINTERS.** IEEE Communications Letters. 2002, vol. 6, 322-324

- **SEONG TAEK CHUNG ; ANGEL LOZANO ; HOWARD C. HUANG.** Approaching Eigenmode BLAST Channel Capacity Using V-BLAST with Rate and Power Feedback. *Proc. IEEE VTC Fall,* 07. Oktober 2001

- **V. JUNGNICKEL et al.** A MIMO WLAN based on Linear Channel Inversion. *IEE Coll. on MIMO Systems,* 12. Dezember 2001